(19) **Europäisches Patentamt**

**European Patent Office**

**Office européen des brevets**

(11) **EP 1 708 349 A1**

(12) **EUROPÄISCHE PATENTANMELDUNG**

| (43) Veröffentlichungstag:<br>04.10.2006 Patentblatt 2006/40 | (51) Int Cl.:<br>*H02M 7/219* (2006.01) |
|---|---|

(21) Anmeldenummer: **05007036.6**

(22) Anmeldetag: **31.03.2005**

| (84) Benannte Vertragsstaaten:<br>**AT BE BG CH CY CZ DE DK EE ES FI FR GB GR**<br>**HU IE IS IT LI LT LU MC NL PL PT RO SE SI SK TR**<br>Benannte Erstreckungsstaaten:<br>**AL BA HR LV MK YU**<br><br>(71) Anmelder: **SEG Schaltanlagen-Elektronik-Geräte**<br>**GmbH & Co. KG**<br>**47906 Kempen (DE)** | (72) Erfinder: **Wrede, Holger**<br>**45665 Recklinghausen (DE)**<br><br>(74) Vertreter: **Cohausz & Florack**<br>**Patent- und Rechtsanwälte**<br>**Bleichstrasse 14**<br>**40211 Düsseldorf (DE)** |
|---|---|

(54) **Stromregelung eines Netzparallelen Spannungsumrichters**

(57)    Die Erfindung betrifft ein Verfahren zur prädiktiven Stromregelung eines netzparallelen, selbstgeführten Spannungsumrichters, bei welchem netzseitig dreiphasige Spannungskomponenten und Stromkomponenten gemessen werden und zur prädiktiven Stromregelung des Spannungsumrichters verwendet werden sowie eine Vorrichtung zur prädiktiven Stromregelung eines netzparallelen, selbstgeführten Spannungsumrichters mit Mitteln zur Messung der netzseitigen, dreiphasigen Spannungskomponenten und Stromkomponenten und Mitteln zur Ansteuerung des selbstgeführten Spannungsumrichters zumindest abhängig von den gemessenen Spannungs- und Stromkomponenten. Die Aufgabe ein gattungsgemäßes Verfahren und eine gattungsgemäße Vorrichtung zur prädiktiven Stromregelung eines netzparallelen, selbstgeführten Spannungsumrichters zur Verfügung zu stellen, welches bzw. welche eine hohe Regelungsdynamik gewährleistet und gleichzeitig bei einer stark verzerrten, oberschwingungsbehafteten Netzspannung eine minimale Netzrückwirkung hervorruft, wird verfahrensmäßig dadurch gelöst, dass die Kreisfrequenz $\omega_f$ und die Phasenlage $\chi_f(t)$ des Grundschwingungsmitsystems der Netzspannung bestimmt werden und die gemessenen, dreiphasigen Spannungs- und Stromkomponenten in die Raumzeiger $\underset{\rightarrow}{u}_c{}'(t)$

und $\underset{\rightarrow}{i}{}'(t)$ eines zur Kreisfrequenz $\omega_f$ und der Phasenlage $\chi_f(t)$ des Grundschwingungsmitsystems der Netzspannung synchron rotierenden Koordinatensystem (xy) transformiert werden.

Fig.1

EP 1 708 349 A1

**Beschreibung**

Die Erfindung betrifft ein Verfahren zur prädiktiven Stromregelung eines netzparallelen, selbstgeführten Spannungsumrichters nach dem Deadbeat-Prinzip, bei welchem netzseitig dreiphasige Spannungskomponenten und Stromkomponenten gemessen werden und zur prädiktiven Stromregelung des Spannungsumrichters nach dem Deadbeat-Prinzip verwendet werden sowie eine Vorrichtung zur prädiktiven Stromregelung eines netzparallelen, selbstgeführten Spannungsumrichters nach dem Deadbeat-Prinzip mit Mitteln zur Messung der netzseitigen, dreiphasigen Spannungskomponenten und Stromkomponenten und Mitteln zur Ansteuerung des selbstgeführten Spannungsumrichters zumindest abhängig von den gemessenen Spannungs- und Stromkomponenten. Darüber hinaus betrifft die Erfindung ein Computerprogramm zur prädiktiven Stromregelung eines netzparallelen, selbstgeführten Spannungsumrichters und Verwendungen der erfindungsgemäßen Vorrichtung.

Unter dem Begriff prädiktive Stromregelung fallen diejenigen Stromregelverfahren, welche Informationen über die Lage oder die Länge eines Gegenspannungszeigers, beispielsweise der Netzspannung, verarbeiten, den Verlauf des Stromzeigers nach dem nächsten Schaltvorgang mehr oder weniger genau vorhersagen und den am besten geeigneten Schaltzustand, beispielsweise eines Spannungsumrichters, schalten, um den vorhergesagten Stromraumzeiger zu erhalten.

Selbstgeführte Spannungsumrichter, welche aus einer eingeprägten Gleichspannung mit Hilfe einer geeigneten Modulation der Ansteuersignale der Leistungsschalter des Spannungsumrichters ein dreiphasiges Ausgangsspannungssystem variabler Amplitude, Phasenlage und Frequenz erzeugen können, werden heute überwiegend zur Regelung von drehzahlvariablen Antrieben eingesetzt. Die eingeprägte Gleichspannung wird dabei zumeist durch einen kondensatorgestützten Gleichspannungszwischenkreis bereitgestellt. Als Leistungsschalter dienen dabei in der Regel MOSFETs (metal oxide semiconductor field effect transistor), IGBTs (isolated gate bipolar transistor) oder GTOs (gate turn of) -Thyristoren.

Der kondensatorgestützte Gleichspannungszwischenkreis kann über einen ungesteuerten Diodengleichrichter aus einem Wechselspannungsnetz versorgt werden. Allerdings ist mit einem entsprechenden Spannungsumrichter keine Rückspeisung möglich. Darüber hinaus werden bei höheren Leistungen starke Netzrückwirkungen in Form von Netzoberschwingungen hervorgerufen.

Diese Nachteile werden durch den Einsatz von netzparallelen, selbstgeführten Spannungsumrichtern als "Vier-Quadranten-Steller" vermieden. Diese sind in der Lage, sowohl Wirkleistung aus dem Wechselspannungsnetz aufzunehmen und rückzuspeisen als auch induktive und kapazitive Blindleistung zu generieren. Eine Aufgabe eines netzparallelen, selbstgeführten Spannungsumrichters eines drehzahlvariablen Antriebssystems ist es, eine konstante Zwischenkreisspannung im Gleichspannungszwischenkreis zwischen dem netzparallelen, selbstgeführten Spannungsumrichter und einem maschinenseitig angeordneten Spannungsumrichter zu gewährleisten. Hierzu muss die Dynamik des netzparallelen, selbstgeführten Spannungsumrichters an die des maschinenseitig vorgesehenen Spannungsumrichters angepasst werden, da Wirkleistungsdifferenzen zwischen beiden Umrichtern aus der typischerweise klein bemessenen Zwischenkreiskapazität gedeckt werden müssen und damit zu starken Schwankungen der Zwischenkreisspannung führen. Darüber hinaus sollte ein netzparalleler, selbstgeführter Spannungsumrichter zur Minimierung der Netzrückwirkung sinusförmige Netzströme generieren, welche nur noch unvermeidbare schaltfrequente Stromoberschwingungen enthalten.

Aus dem Stand der Technik sind zur dynamischen Regelung des Netzstromes eines netzparallelen, selbstgeführten Spannungsumrichters prinzipiell drei verschiedene Verfahren bekannt. Eine einfache und robuste Regelung stellt die Hysterese-Regelung, auch Phasenstromregelung genannt, dar. Bei diesem Regelungsverfahren werden die Phasenströme bzw. deren Raumzeigerkomponenten nach einer Raumzeigertransformation in einem vorgegebenen Toleranzband, dass symmetrisch um deren Sollwerte angelegt ist, gehalten. Dies geschieht mit Hilfe eines einfachen Hysterese-Komperators der den Spannungsumrichter geeignet umschaltet, sobald eine Bandgrenze erreicht wird. Nachteilig ist, dass sich hieraus eine nicht konstante Schaltfrequenz des Spannungsumrichters ergibt, welche die Auslegung eines Netzfilters erheblich erschwert. Dies kann lediglich durch zusätzlichen Aufwand unter Verwendung eines Phase-Locked-Loop(PLL)-Verfahren zusammen mit einer geeigneten Vorsteuerung der Stromkomponenten erzielt werden, so dass die Toleranzbandbreite abhängig von der Ausgangsspannung variiert und damit eine konstante mittlere Schaltfrequenz für den Spannungsumrichter erreicht werden kann.

Alternativ hierzu ist aus dem Stand der Technik eine lineare Netzstromregelung bekannt, bei welcher entweder in einem festen oder rotierenden Koordinatensystem die Raumzeigerkomponenten der Netzströme des Spannungsumrichters jeweils mit Hilfe eines PI-Reglers auf ihren Sollwert geregelt und die resultierende Stromrichterspannungssollwerte einer Pulsweiten-Modulation (PWM) zur Generierung der Ansteuersignale der Leistungshalbleiter übertragen werden. Zur Entkopplung der beiden Stromkomponentenregler wird üblicherweise ein Modell einer Umrichterdrossel unter Berücksichtigung der Induktivität der Netzdrossel verwendet, womit eine Verbesserung des dynamischen Verhaltens der linearen Netzstromregelung erzielt wird. Die Pulsweitenmodulation kann dabei sowohl analog als auch digital durchgeführt werden, wobei die unvermeidbaren Totzeiten des digitalen Steuerungssystems durch das Vorsteuern des von der Regelung für den Abtastzeitpunkt bestimmten "idealen" Sollspannungsraumzeigers kompensiert wird. Das robuste Regelungsverfahren ist jedoch aufgrund der Verwendung der PI-Regler in seiner Dynamik begrenzt.

Zur Verbesserung der Dynamik kann bei digitalen Stromregelungen eines netzparallelen, selbstgeführten Spannungsumrichters ein Deadbeat-Verfahren in vorteilhafter Weise genutzt werden, welches gegenüber dem kontinuierlichen PI-Regler mit prinzip-bedingter unendlicher Ausregelzeit einer Regelabweichung eine Ausregelung der Regelabweichung vom Sollwert in einer definierten Zeit erreicht. Die digitale Diskretisierung ergibt sich dabei aus der Abtastfrequenz und der zugehörigen Modulationsperiode der Regelung.

Üblicherweise werden hierzu im festen Koordinatensystem die umrichterseitigen Spannungssollwerte derart bestimmt, dass am Ende der folgenden Modulationsperiode aufgrund der eingestellten umrichterseitigen Spannungswerte die Netzströme bzw. deren Raumzeigerkomponenten den Sollwerten entsprechen und die Abweichung vom Sollwert damit ausgeregelt ist. Hierdurch wird eine hohe Dynamik der Regelung erzielt. Für die exakte Bestimmung der umrichterseitigen Sollspannungswerte müssen bei diesem Stromregelverfahren die Verläufe der Netzspannung und des Netzstromes bis zum Ende der folgenden Modulationsperiode sowie die Netzimpedanz bekannt sein. Damit hängt die Genauigkeit und Stabilität des Regelungsverfahrens von der Genauigkeit der Vorhersage der Netzspannungen und Netzströme, des hinterlegten Netzmodells und der gewählten digitalen Diskretisierung ab.

Die zuvor beschriebenen Stromregelungsverfahren sind beispielsweise aus dem Artikel "IEEE Transactions on Industrial Electronics, Comparison of Current Control Techniques for Active Filter Application", Vol. 45, No. 5, October 1998, bekannt.

Ausgehend von diesem Stand der Technik liegt der vorliegenden Erfindung damit die Aufgabe zugrunde, ein gattungsgemäßes Verfahren und eine gattungsgemäße Vorrichtung zur prädiktiven Stromregelung eines netzparallelen, selbstgeführten Spannungsumrichters zur Verfügung zu stellen, welches bzw. welche eine hohe Regelungsdynamik gewährleistet und gleichzeitig bei einer stark verzerrten, oberschwingungsbehafteten Netzspannung eine minimale Netzrückwirkung hervorruft. Darüber hinaus liegt der Erfindung die Aufgabe zugrunde, ein entsprechendes Computerprogramm zur Durchführung des erfindungsgemäßen Verfahrens und vorteilhafte Verwendungen der erfindungsgemäßen Vorrichtungen vorzuschlagen.

Gemäß einer ersten Lehre der vorliegenden Erfindung wird die oben hergeleitete Aufgabe für ein gattungsgemäßes Verfahren dadurch gelöst, dass die Kreisfrequenz $\omega_f$ und die Phasenlage $\chi_f(t)$ des Grundschwingungsmitsystems der Netzspannung bestimmt werden und die gemessenen, dreiphasigen Spannungs- und Stromkomponenten in die Raumzeiger $\underrightarrow{u}_c{}'(t)$ und $\underrightarrow{i}{}'(t)$ eines mit der Kreisfrequenz $\omega_f$ und der Phasenlage $\chi_f(t)$ des Grundschwingungsmitsystems der Netzspannung rotierenden Koordinatensystems (xy) transformiert werden.

Die Phasenlage $\chi_f(t)$ des Grundschwingungsmitsystems der Netzspannung wird bestimmt durch die Gleichung:

$$\chi_f(t) = \omega_f \cdot t \qquad\qquad (1)$$

Die Werte für die Phasenlage $\chi_f(t)$ des Grundschwingungsmitsystems der Netzspannung und der Kreisfrequenz $\omega_f$ sind frei von im Netz vorhandenen Oberschwingungen oder Verzerrungen. Damit wird durch die Berücksichtigung der Kreisfrequenz $\omega_f$ der Netzspannung und der Phasenlage des Grundschwingungsmitsystems $\chi_f(t)$ auch bei verzerrten Netzspannungen, d.h. bei möglicherweise vorhandenen Oberschwingungen und Zwischenharmonischen der Netzspannung, es ermöglicht, sinusförmige Netzströme des netzparallelen, selbstgeführten Spannungsumrichters auf einfache Weise zu erzeugen, indem der transformierte Stromraumzeiger $\underrightarrow{i}{}'(t)$ in dem rotierenden Koordinatensystem (xy) auf einen konstanten Wert gesteuert oder geregelt wird. Insofern ist eine von möglicherweise vorhandenen Oberschwingungen und Zwischenharmonischen der Netzspannung sowie auftretenden Spannungsgegensystemen nahezu unabhängige Regelung des Stromraumzeigers $\underrightarrow{i}{}'(t)$ möglich.

Wird die Kreisfrequenz $\omega_f$ und die Phasenlage $\chi_f(t)$ des Grundschwingungsmitsystems der Netzspannung unter Verwendung eines Phase-Locked-Loop-Verfahrens aus den netzseitig gemessenen, dreiphasigen Spannungskomponenten $\underrightarrow{u}_c(t)$ ermittelt, kann auf einfache Weise die Kreisfrequenz $\omega_f$ sowie die Phasenlage $\chi_f(t)$ des Grund-

schwingungsmitsystems der Netzspannung bestimmt werden.

Gemäß einer weitergebildeten Ausführungsform des erfindungsgemäßen Verfahrens werden die gemessenen dreiphasigen Spannungs- und Stromkomponenten $\underrightarrow{u}_c(t)$ und $\underrightarrow{i}(t)$ vor der Transformation in das rotierende Koordinatensystem (xy) zuerst in die Raumzeigerebene ($\alpha\beta$) transformiert. In der Raumzeigerebene ($\alpha\beta$) kann aus den gemessenen Spannungs- und Stromkomponenten $\underrightarrow{u}_c(t)$ und i(t) in einfacher Weise die vom Spannungsumrichter abgegebene oder aufgenommene Blindleistung q(t) bestimmt werden, da in der Raumzeigerebene Wirk- und Blindleistungskomponenten orthogonal zueinander sind. Allerdings kann die Transformation in das rotierende Koordinatensystem (xy) auch in einem Schritt durchgeführt werden und die Blindleistung aus den dreiphasigen Komponenten oder aus den Strom- und Spannungskomponenten im rotierenden Koordinatensystem (xy) bestimmt werden.

Eine weitere Verbesserung der Genauigkeit des Verfahrens zur prädiktiven Stromregelung eines netzparallelen, selbstgeführten Spannungsumrichters wird gemäß einer vorteilhaft weitergebildeten Ausführungsform des erfindungsgemäßen Verfahrens dadurch erreicht, dass der Spannungsumrichter durch eine Pulsweitenmodulation (PWM) gesteuert wird und zur Steuerung der PWM Zustände des netzseitigen Spannungsraumzeigers $\underrightarrow{u}_c{}'(t)$ für zukünftige Modulationsperioden aus der gemessenen netzseitigen Spannung $\underrightarrow{u}_c(t)$ unter Verwendung einer quadratischen Extrapolation aus Zuständen des netzseitigen Spannungsraumzeigers $\underrightarrow{u}_c{}'(t)$ vorheriger Modulationsperioden abgeschätzt werden, wobei sich die Modulationsperiode $T_M$ aus dem Kehrwert der Abtastfrequenz der PWM des netzparallelen, selbstgeführten Spannungsumrichters ergibt. Die Modulationsperiode $T_M$ ergibt sich dabei aus der Gleichung:

$$T_M = 1/f_S, \qquad\qquad\qquad (2)$$

wobei $f_s$ die Schaltfrequenz des Spannungsumrichters ist. Die quadratische Extrapolation zukünftiger Zustände des netzseitigen Spannungsraumzeigers $\underrightarrow{u}_c{}'(t)$ liefert bei verzerrten Netzspannungen, insbesondere bei typischen sechs- und höherpulsigen Netzspannungsverzerrungen, gute Ergebnisse hinsichtlich der Vorausbestimmung der Zustände des netzseitigen Spannungsraumzeigers $\underrightarrow{u}_c{}'(t)$ für zukünftige Modulationsperioden.

Die Vorausbestimmung der zukünftigen Zustände des netzseitigen Spannungsraumzeigers $\underrightarrow{u}_c{}'(t)$ kann gemäß einer nächsten Ausführungsform des erfindungsgemäßen Verfahrens dadurch vereinfacht werden, dass die Abtastfrequenz der PWM so gewählt wird, dass innerhalb einer Modulationsperiode die Spannungs- und Stromraumzeigerverläufe $\underrightarrow{u}_c{}'(t)$ und $\underrightarrow{i}{}'(t)$ im Wesentlichen linear sind und die Zwischenkreisspannung $U_d$ im Wesentlichen konstant ist. Damit wird es möglich, den Stromraumzeiger $\underrightarrow{i}{}'(t + T_M)$ zu Beginn der folgenden Modulationsperiode und einen umrichterseitigen Söllspannungsraumzeiger $\underrightarrow{u}{}^*{}_{LSC}{}'(t + T_M)$ für die folgende Modulationsperiode zu bestimmen.

Gemäß einer weitergebildeten Ausführungsform des erfindungsgemäßen Verfahrens kann die Stromregelung des netzparallelen, selbstgeführten Spannungsumrichters dadurch weiter verbessert werden, dass eine Spannungsvorsteuerung des netzparallelen, selbstgeführten Spannungsumrichters durchgeführt wird, bei welcher ein umrichter-

seitiger Sollspannungsraumzeiger $\underrightarrow{u}{}^{\ast}{}_{LSC}{}'(t + T_M)$ für die folgende Modulationsperiode zur Ansteuerung des netzparallelen, selbstgeführten Spannungsumrichters über die PWM ermittelt wird, wobei bei der Ermittlung des umrichterseitigen Sollspannungsraumzeigers $\underrightarrow{u}{}^{\ast}{}_{LSC}{}'(t + T_M)$ für die folgende Modulationsperiode ein Drosselmodell für die Umrichterdrossel verwendet wird, welches eine Induktivität $L_D$ und einen ohmschen Widerstand $R_D$ berücksichtigt. Durch die Berücksichtigung sowohl der Induktivität $L_D$ und des ohmschen Widerstandes $R_D$ wird die Genauigkeit der Spannungsvosteuerung gegenüber der Berücksichtigung lediglich der Induktivität der Umrichterdrossel $L_D$ gesteigert.

Die Spannungsvorsteuerung des netzparallelen, selbstgeführten Spannungsumrichters kann gemäß einer weiteren Ausführungsform des erfindungsgemäßen Verfahrens dadurch vorteilhaft weiterentwickelt werden, dass zur Stromvorsteuerung ein Drosselmodell verwendet wird, welches die Induktivität $L_D$ und den ohmschen Widerstand $R_D$ der Umrichterdrossel berücksichtigt und der Stromraumzeigers $\underrightarrow{i}{}'(t + T_M)$ zu Beginn der folgenden Modulationsperiode berechnet wird, der berechnete Stromraumzeiger nach dem Deadbeat-Prinzip arbeitenden Mitteln übergeben wird, um einen Stromraumzeiger $\underrightarrow{i}{}'(t + 2T_M)$ zum Ende der folgenden Modulationsperiode zu ermitteln und der Stromraumzeiger $\underrightarrow{i}{}'(t + T_M)$ zu Beginn der folgenden Modulationsperiode sowie der Stromraumzeiger zum Ende der folgenden Modulationsperiode $\underrightarrow{i}{}'(t + 2_{TM})$ der Spannungsvorsteuerung des netzparallelen, selbstgeführten Spannungsumrichters zur Ermittlung des umrichterseitigen Sollspannungsraumzeigers $\underrightarrow{u}{}^{\ast}{}_{LSC}(t + T_M)$ übergeben werden. Durch die Kombination einer prädiktiven Stromregelung nach dem Deabeat-Prinzipund einer Strom- und Spannungsvorsteuerung, welche die Umrichterdrossel berücksichtigen, kann nicht nur die hohe Regeldynamik des Deadbeat-Prinzips ausgenutzt werden, sondern auch eine hohe Robustheit der Regelung gegenüber Parameteränderungen erzielt werden.

Eine weitere Verbesserung wird dadurch erzielt, dass die Induktivität $L_D$ und der ohmsche Widerstand $R_D$ während der Durchführung des Verfahrens zur prädiktiven Stromregelung des netzparallelen, selbstgeführten Spannungsumrichters neu ermittelt werden, so dass Änderungen der entsprechenden Parameter online bei der Stromregelung des netzparallelen, selbstgeführten Spannungsumrichters berücksichtigt werden können. Insbesondere können hierdurch Erwärmungen der Bauteile, welche zu Änderungen der Induktivität und des ohmschen Widerstandes führen und damit abhängig von dem jeweiligen Betriebszustand des Spannungsumrichters sind, in der Stromregelung berücksichtigt werden.

Wird der ermittelte, umrichterseitige Spannungsraumzeiger $\underrightarrow{u}{}^{\ast}{}_{LSC}{}'(t + T_M)$ zur Ansteuerung der PWM in die Raumzeigerebene ($\alpha\beta$) transformiert und erfolgt eine Vorsteuerung um $3/2\,\omega_f T_M$, kann, gemäß einer nächsten Ausführungsform des erfindungsgemäßen Verfahrens, eine geeignete Vorsteuerung des Spannungsumrichters erzielt werden, um unvermeidbare Totzeiten des digitalen Regelungssystems zu kompensieren. Darüber hinaus kann eine PWM mit Symmetrierung und "Single Edge Regular Sampling", auch als Raumzeigermodulation bekannt, eingesetzt werden, welche bei angenommen konstanter Zwischenkreisspannung die vorgegebene Sollspannung jeweils in einer halben Modulationsperiode im Mittel erzeugt und die Nullzustandsdauern am Anfang und Ende symmetriert. Die Symmetrierung kann dabei einfach durch ein aufmoduliertes Nullsystem erzielt werden, welches sich direkt aus der Hälfte der betragsmäßig kleinsten Sollspannung ergibt.

Die Genauigkeit der Berechnung des Wertes des Stromraumzeigers $\underrightarrow{i}{}'(t + T_M)$ zu Beginn der Modulationsperiode wird dadurch verbessert, dass gemäß einer nächsten vorteilhaften Ausführungsform des erfindungsgemäßen Verfahrens, der momentan geschaltete umrichterseitige Spannungsraumzeiger $\underrightarrow{u}{}_{LSC}{}'(t)$ aus der gemessenen Zwischenkreisspannung $U_d(t)$ und des von der PWM am Ende der vorangegangenen Modulationsperiode bestimmten Pulsmuster über eine Rückkopplung ermittelt wird und zur Berechnung des Stromraumzeigers $\underset{\rightarrow}{i}'(t + T_M)$ zu Beginn der folgenden Modulationsperiode verwendet wird.

Wird aus dem berechneten Stromraumzeiger $\underset{\rightarrow}{i}'(t + T_M)$ zu Beginn der folgenden Modulationsperiode und einem vorgegebenen Sollstromraumzeiger zum Ende der folgenden Modulationsperiode $\underset{\rightarrow}{i}*'(t + 2T_M)$ der Stromraumzeiger zum Ende der folgenden Modulationsperiode $\underset{\rightarrow}{i}'(t + 2T_M)$ berechnet, wobei eine zu beginn der Modulationsperiode vorhandene Regelabweichung nach dem Deadbeat-Prinzip bis zum Ende der nachfolgenden Modulationsperiode vollständig ausgeregelt werden kann, kann eine besonders hohe Dynamik auch bei Vollausregelung der Stromregelung des netzparallelen, selbstgeführten Spannungsumrichters erzielt werden. Die beim Deadbeat-Prinzip typischerweise auftretende Totzeit von $2T_M$ kann durch zweimaliges Messen der zur Regelung notwendigen Parametern und Durchführen der Regelung innerhalb einer Modulationsperiode reduziert bzw. halbiert werden. Dies wird über eine PWM mit Symmetrierung und "Double Edge Regular Sampling" erreicht.

Instabilitäten beim Anfahren der Stromregelung und eventuell auftretende Resonanzen können wirkungsvoll dadurch unterdrückt werden, dass die Berechnung des Stromraumzeigers zum Ende der folgenden Modulationsperiode $\underset{\rightarrow}{i}'(t + 2T_M)$ durch einen nach dem Deadbeat-Prinzip arbeitenden und eine variable Verstärkung aufweisenden P-Regler ausgeführt wird. Ein Verstärkungsfaktor von $0 < V < 1$ führt beispielsweise zu einem asymptotischen, überschwingungsfreien Ausregelverhalten der Stromregelung, was beim Anfahren der Stromreglung gewünscht sein kann. Dagegen führt eine Verstärkung von $1 < V < 2$ zu einem Ausregelverhalten mit Überschwingungen. Wird die Verstärkung auf $V = 1$ festgelegt, so wird die Berechnung des Stromraumzeigers zum Ende der folgenden Modulationsperiode $\underset{\rightarrow}{i}'(t + 2T_M)$ nach dem Deadbeat-Verfahren berechnet, wobei zum Ende der folgenden Modulationsperiode die Regelabweichung vollständig ausgeregelt ist.

Gemäß einer weiteren vorteilhaften Ausführungsform des erfindungsgemäßen Verfahrens kann die Zwischenkreisspannung $U_d(t)$ auf einfache Weise auf einen konstanten Wert geregelt oder gesteuert werden, wenn aus der gemessenen Zwischenkreisspannung $U_d(t)$ und einem vorgegebenen Sollwert für die Zwischenkreisspannung $U^*d$ über eine entsprechende Regelung und/oder Steuerung, insbesondere unter Verwendung eines PI-Reglers, eine Sollwirkstromkomponente $i^*_y$ des netzseitigen Stromraumzeigers ermittelt wird, welche zur Ermittlung des Stromraumzeigers zum Ende der folgenden Modulationsperiode $\underset{\rightarrow}{i}'(t + 2T_M)$ verwendet wird. Der Stromraumzeiger zum Ende der folgenden Modulationsperiode $\underset{\rightarrow}{i}'(t + 2T_M)$ wird zur Spannungsvorsteuerung des Spannungsumrichters verwendet, welche wiederum die Zwischenkreisspannung beeinflusst.

Schließlich kann die Abgabe der Blindleistung $q(t)$ des netzparallelen, selbstgeführten Spannungsumrichters dadurch geregelt werden, dass unter Verwendung der netzseitig gemessenen Spannungs- und Stromraumzeiger die Blindleistungsabgabe $q(t)$ des netzparallelen, selbstgeführten Spannungsumrichters ermittelt wird und eine Blindleistungsregelung oder -steuerung, insbesondere unter Verwendung eines PI-Reglers, auf einen vorgegebenen Blindleistungswert $q^*$ erfolgt, wobei ein Sollwert für die zugehörige Blindstromkomponente $i^*_x$ des Stromraumzeigers berechnet wird, welche zur Ermittlung des Stromraumzeigers zum Ende der folgenden Modulationsperiode $\underset{\rightarrow}{i}'(t + 2T_M)$ verwendet wird.

Eine weitere Steigerung der Dynamik der Zwischenkreisspannungsregelung und der Blindleistungsregelung kann dadurch erzielt werden, dass zusätzlich eine Vorsteuerung der Blindstromkomponente $i^*_x$ und der Wirkstromkomponente $i^*y$ durchgeführt wird.

Wird das erfindungsgemäße Verfahren unter Verwendung einer Datenverarbeitungsanlage durchgeführt, so kann das erfindungsgemäße Verfahren nicht nur besonders schnell ausgeführt, sondern auch die ermittelten Mess- und Regelgrößen benutzergerecht dargestellt oder aufgezeichnet werden. Vorteile ergeben sich insbesondere bei der Durchführung des erfindungsgemäßen Verfahrens unter Ausführung eines Computerprogramms auf einer Datenverarbeitungsanlage dadurch, dass das Computerprogramm leicht ausgetauscht und auf anderen Vorrichtungen zur prädiktiven Stromregelung eines netzparallelen Spannungsumrichters einsetzbar ist.

Gemäß einer zweiten Lehre der vorliegenden Erfindung wird die oben aufgezeigte Aufgabe durch ein Computerprogramm mit Befehlen, deren Ausführung mindestens einen Prozessor einer Datenverarbeitungsanlage veranlasst, dass erfindungsgemäße Verfahren durchzuführen, gelöst. Ein erfindungsgemäßes Computerprogramm kann darüber hinaus auf verschiedenen Datenverarbeitungsanlagen ausgeführt werden, so dass entsprechend vorbereitete Vorrichtungen durch Austausch des Computerprogramms in der Lage sind das erfindungsgemäße Verfahren durchzuführen.

Gemäß einer dritten Lehre der vorliegenden Erfindung wird die oben aufgezeigte Aufgabe durch eine gattungsgemäße Vorrichtung zur prädiktiven Stromregelung eines netzparallelen, selbstgeführten Spannungsumrichters dadurch gelöst, dass Mittel zur Bestimmung der Kreisfrequenz $\omega_f$ und der Phasenlage $\chi_f(t)$ des Grundschwingungsmitsystems der Netzspannung und Mittel zur Transformation der gemessenen dreiphasigen Spannungs- und Stromkomponenten

$\underset{\rightarrow}{u}_c(t)$ und $\underset{\rightarrow}{i}(t)$ in netzseitige Spannungs- und Stromraumzeiger $\underset{\rightarrow}{u}_c{}'(t)$, $\underset{\rightarrow}{i}{}'(t)$ eines zur Kreisfrequenz und Phasenlage $\chi_f(t)$ des Grundschwingungsmitsystems der Netzspannung synchron rotierenden Koordinatensystems (xy) vorgesehen sind und die Mittel zur Ansteuerung des netzparallelen, selbstgeführten Spannungsumrichters diesen zumindest abhängig von den gemessenen Spannungs- und Stromraumzeigern $\underset{\rightarrow}{u}_c{}'(t)$ und

$\underset{\rightarrow}{i}{}'(t)$ regeln oder steuern.

Aufgrund der Steuerung des netzparallelen, selbstgeführten Spannungsumrichters zumindest abhängig von den transformierten Spannungs- und Stromraumzeigern $\underset{\rightarrow}{u}_c{}'(t)$ und $\underset{\rightarrow}{i}{}'(t)$ kann auch bei stark verzerrten und oberschwingungsbelasteten Netzspannungen eine exakte Stromregelung des netzparallelen, selbstgeführten Spannungsumrichters auf konstante Stromraumzeigersollwerte durchgeführt werden.

Gemäß einer besonders einfachen Ausführung der erfindungsgemäßen Vorrichtung sind Mittel vorgesehen, welche die Kreisfrequenz $\omega_f$ und die Phasenlage $\chi_f(t)$ des Grundschwingungsmitsystems der Netzspannung unter Verwendung eines PLL-Verfahrens ermitteln.

Steuern die Mittel zur Ansteuerung des netzparallelen, selbstgeführten Spannungsumrichters den Spannungsumrichter über eine PWM an, so kann durch Erhöhung der Abtastfrequenz der PWM in einfacher Weise die Genauigkeit der Stromregelung verbessert werden.

Eine weitere Verbesserung der Genauigkeit der Stromregelung wird dadurch erreicht, dass Mittel zur Abschätzung der Zustände des netzseitigen Spannungsraumzeigers $\underset{\rightarrow}{u}_c{}'(t)$ für zukünftige Modulationsperioden $T_M$ vorgesehen sind, welche unter Verwendung einer quadratischen Extrapolation aus Zuständen des netzseitigen Spannungsraumzeigers $\underset{\rightarrow}{u}_c{}'(t)$ vorheriger Modulationsperioden den Zustand des Spannungsraumzeigers $\underset{\rightarrow}{u}_c{}'(t)$ abschätzen.

Sind Mittel zur Spannungsvorsteuerung vorgesehen, welche einen umrichterseitigen Sollspannungsraumzeiger $\underset{\rightarrow}{u}{}^*{}_{LSC}(t + T_M)$ zu Beginn der Modulationsperiode zur Ansteuerung des netzparallelen, selbstgeführten Spannungsumrichters ermitteln und bei der Berechnung ein Drosselmodell verwenden, welches die Induktivität $L_D$ und den ohmschen Widerstand $R_D$ berücksichtigt, so kann gemäß einer vorteilhaften Ausführungsform der erfindungsgemäßen Vorrichtung die Stromregelung des netzparallelen, selbstgeführten Spannungsumrichters weiter präzisiert werden. Es hat sich insbesondere gezeigt, dass die Berücksichtigung des ohmschen Widerstandes der Umrichterdrossel, welcher im Allgemeinen sehr gering ist, nicht vernachlässigbar ist und zu einer weiteren Steigerung der Genauigkeit der Regelung führt.

Das Gleiche kann gemäß einer weitergebildeten Ausführungsform dadurch erzielt werden, dass Mittel zur Stromvorsteuerung vorgesehen sind, welche den Stromraumzeiger $\underset{\rightarrow}{i}{}'(t + T_M)$ zu Beginn der folgenden Modulationsperiode aus dem netzseitigen Stromraumzeiger $\underset{\rightarrow}{i}{}'(\text{t})$, dem abgeschätzten netzseitigen Spannungsraumzeiger nach einer halben Modulationsperiode $\underset{\rightarrow}{u}{}_c{}'(\text{t} + 1/2\text{T}_M)$ und dem momentanen geschalteten,

umrichterseitigen Spannungsraumzeiger $\underset{\rightarrow}{u}{}_{LSC}{}'(\text{t})$ über ein Drosselmodell, welches die Induktivität $L_D$ und den ohmschen Widerstand $R_D$ der Umrichterdrossel berücksichtigt, ermitteln und den Stromraumzeiger zu Beginn der Modulationsperiode $\underset{\rightarrow}{i}{}'(\text{t} + \text{T}_M)$ an die Mittel zur Spannungsvorsteuerung übergeben. Auch bei der vorgelagerten Stromvorsteuerung wirkt sich die Berücksichtigung des im Allgemeinen sehr geringen ohmschen Widerstandes der Umrichterdrossel positiv auf die Genauigkeit der erfindungsgemäßen Vorrichtung zur prädiktiven Stromregelung eines netzparallelen Spannungsumrichters aus.

Eine hohe Regelungsdynamik der Stromregelung kann, gemäß einer weiteren vorteilhaften Ausführungsform der erfindungsgemäßen Vorrichtung, dadurch erreicht werden, dass nach dem Deadbeat-Prinzip arbeitende Mittel zur prädiktiven Stromregelung vorgesehen sind und die nach dem Deadbeat-Prinzip arbeitenden Mittel zur prädiktiven Stromregelung aus dem Stromraumzeiger zu Beginn der folgenden Modulationsperiode $\underset{\rightarrow}{i}{}'(\text{t} + \text{T}_M)$ und einem vorgegebenen Sollstromraumzeiger zum Ende der folgenden Modulationsperiode $\underset{\rightarrow}{i}{}^{*}{}'(\text{t} + 2\text{T}_M)$ den Stromraumzeiger zum Ende der folgenden Modulationsperiode $\underset{\rightarrow}{i}{}'(\text{t} + 2\text{T}_M)$ ermitteln und an die Mittel zur Spannungsvorsteuerung übergeben. Die nach dem Deadbeat-Prinzip arbeitenden Mittel können dabei als einfacher P-Regler mit einer variablen Verstärkung und/oder einer geeigneten Vorsteuerung des Stromraumzeigers ausgeführt werden, so dass sich diese besonders einfach digital implementieren lassen.

Die Abgabe/Aufnahme einer bestimmten Blindleistung des netzparallelen, selbstgeführten Spannungsumrichters kann dadurch erreicht werden, dass Mittel zur Messung der netzseitigen Blindleistung q(t) und/oder Mittel zur Regelung oder Steuerung der Blindleistung q(t) vorgesehen sind.

Ist der Spannungsumrichter mit einem Gleichspannungszwischenkreis verbunden und sind Mittel zur Messung der Zwischenkreisspannung und/oder Mittel zur Regelung oder Steuerung der Zwischenkreisspannung vorgesehen, so kann die Zwischenkreisspannung auf einem konstanten Wert gesteuert oder geregelt werden.

Auf besonders einfache Art und Weise kann eine Regelung der Blindleistung q(t) und/oder der Zwischenkreisspannung $U_d(t)$ dadurch erreicht werden, dass die Mittel zur Regelung der Blindleistung q(t) und der Zwischenkreisspannung $U_d(t)$ als PI-Regler ausgebildet sind. Über die entsprechenden Mittel können Sollwerte für die Blindstromkomponente $i^{*}_x$ und/oder ein Sollwert für Wirkstromkomponente $i^{*}_y$ ermittelt und als Sollstromraumzeiger

$\underset{\rightarrow}{i}{}^{*}{}'(\text{t} + 2\text{T}_M)$ zum Ende der folgenden Modulationsperiode an die nach dem Deadbeat-Prinzip arbeitenden Mittel zur prädiktiven Stromregelung übergeben werden. Darüber hinaus könnten an Stelle der PI-Regler auch andere Steuer- oder Regelungsmittel Anwendung finden.

Eine weitere Verbesserung der Stromregelung ergibt sich unter Berücksichtigung des momentanen, umrichterseitigen Spannungsraumzeigers $\underset{\rightarrow}{u}{}_{LSC}{}'(\text{t})$. Dies wird in einer weitergebildeten Ausführungsform der erfindungsgemäßen Vorrichtung dadurch erreicht, dass Mittel zur Rückkopplung vorgesehen sind, welche aus der gemessenen Zwischenkreisspannung $U_d(t)$ und des von der PWM am Ende der nachfolgenden Modulationsperiode bestimmten Pulsmusters den während der momentanen Modulationsperiode geschalteten, umrichterseitigen Spannungsraumzeiger

$\underset{\rightarrow}{u}{}_{LSC}{}'(\text{t})$ ermitteln und an die Mittel zur Stromvorsteuerung übergeben.

Eine Steigerung der Regeldynamik kann schließlich dadurch erzielt werden, dass, gemäß einer weitergebildeten vorteilhaften Ausführungsform der erfindungsgemäßen Vorrichtung, Mittel zur Vorsteuerung des Sollwertes der Blindstromkomponente $i_x{}^{*}$ und/oder Mittel zur Vorsteuerung des Sollwertes der Wirkstromkomponente $i_y{}^{*}$ vorgesehen sind.

Die Steuerung der PWM kann über dreiphasige Spannungskomponenten erfolgen, wenn Mittel vorgesehen sind, welche den ermittelten, umrichterseitigen Sollspannungsraumzeiger $\underrightarrow{u}*_{LSC}'(t + T_M)$ aus dem zur Kreisfrequenz $\omega_f$ und der Phasenlage $\chi_f$ (t) des Grundschwingungsmitsystems der Netzspannung synchron rotierenden Koordinatensystem (xy) zuerst in die Raumzeigerebene ($\alpha\beta$) und anschließend in die dreiphasigen Spannungskomponenten transformieren. Wie bereits bezüglich Transformation in das rotierende Koordinatensystem ausgeführt, kann die Rücktransformation des Sollspannungsraumzeigers $\underrightarrow{u}*_{LSC}'(t + T_M)$ alternativ auch in einem Schritt durchgeführt werden.

Dabei kann die Totzeit der digitalen Regelung dadurch kompensiert werden, dass die Mittel zur Rücktransformation eine Vorsteuerung des umrichterseitigen Sollspannungsraumzeiger $\underrightarrow{u}*_{LSC}(t + T_M)$ um $3/2\ \omega_f T_M$ durchführen.

Eine leichte Visualisierung, Aufzeichnung und Generierung der notwendigen Daten für die Stromregelung wird dadurch erreicht, dass gemäß einer nächsten vorteilhaften Ausführungsform der erfindungsgemäßen Vorrichtung, die Vorrichtung Mittel zur Datenverarbeitung aufweist, mit welchem das erfindungsgemäße Computerprogramm ausführbar ist.

Ist die erfindungsgemäße Vorrichtung modular aufgebaut, so kann diese leicht in bereits bestehende Anlagen integriert werden oder um weitere Komponenten erweitert werden.

Schließlich wird gemäß einer dritten Lehre der vorliegenden Erfindung die oben hergeleitete Aufgabe dadurch gelöst, dass die erfindungsgemäße Vorrichtung zur prädiktiven Stromregelung eines netzparallelen, selbstgeführten Spannungsumrichters in dezentralen Energieerzeugungsanlagen, insbesondere Windkraft- oder Photovoltaikanlagen, in aktiven Filtern, unterbrechungsfreien Stromversorgungsanlagen oder in elektrischen Antrieben, insbesondere Maschinen mit variabler Drehzahl, verwendet werden.

Es existieren eine Vielzahl von Möglichkeiten, die vorliegende Erfindung auszugestalten und weiterzubilden. Hierzu wird beispielsweise verwiesen einerseits auf die dem Patentanspruch 1 nachgeordneten Patentansprüche, andererseits auf die Beschreibung zweier Ausführungsbeispiele einer erfindungsgemäßen Vorrichtung zur prädiktiven Stromregelung eines netzparallelen, selbstgeführten Spannungsumrichters in Verbindung mit der Zeichnung. In der Zeichnung zeigt

Fig. 1 ein Blockschaltbild eines Ausführungsbeispiels einer erfindungsgemäßen Vorrichtung zur prädiktiven Stromregelung eines netzparallelen, selbstgeführten Spannungsumrichters,

Fig. 2 ein Raumzeigersatzschaltbild des Drosselmodells, welches beim Ausführungsbeispiel der Fig. 1 Anwendung findet,

Fig. 3 ein Blockschaltbild der beim Ausführungsbeispiel aus Fig. 1 verwendeten Mittel zur prädiktiven Stromregelung nach dem Deadbeat-Prinzip,

Fig. 4 die zugehörigen Stromraumzeiger in dem synchron zum Grundschwingungsmitsystem der Netzspannung rotierenden Koordinatensystems (xy) der in Fig. 3 dargestellten Mittel zur prädiktiven Stromregelung nach dem Deadbeat-Prinzip,

Fig. 5 ein Diagramm mit den simulierten stationären Spannungs- und Stromverläufen eines zweiten Ausführungsbeispiels,

Fig. 6 ein Diagramm der zugehörigen Amplitudenspektren der simulierten stationären Spannungs- und Stromverläufe bei 50 % Nennlast des zweiten Ausführungsbeispiels,

Fig. 7 ein Diagramm der relativen Änderung der Zwischenkreisspannung, der Blind- und Wirkleistung im Falle eines simulierten Lastsprungs vom generatorischen in den motorischen Betrieb bei 100 % Nennleistung,

Fig. 8 die zu dem Lastsprung aus Fig. 7 zugehörigen Spannungs- und Stromverläufe,

Fig. 9 ein Diagramm relativen Änderungen der Zwischenkreisspannung, Blind- und Wirkleistung bei einem simulierten Lastsprung vom motorischen in den generatorischen Betrieb bei 100 % Nennleistung und

Fig. 10    die zugehörigen simulierten Spannungs- und Stromverläufe zum Lastsprung aus Fig. 9.

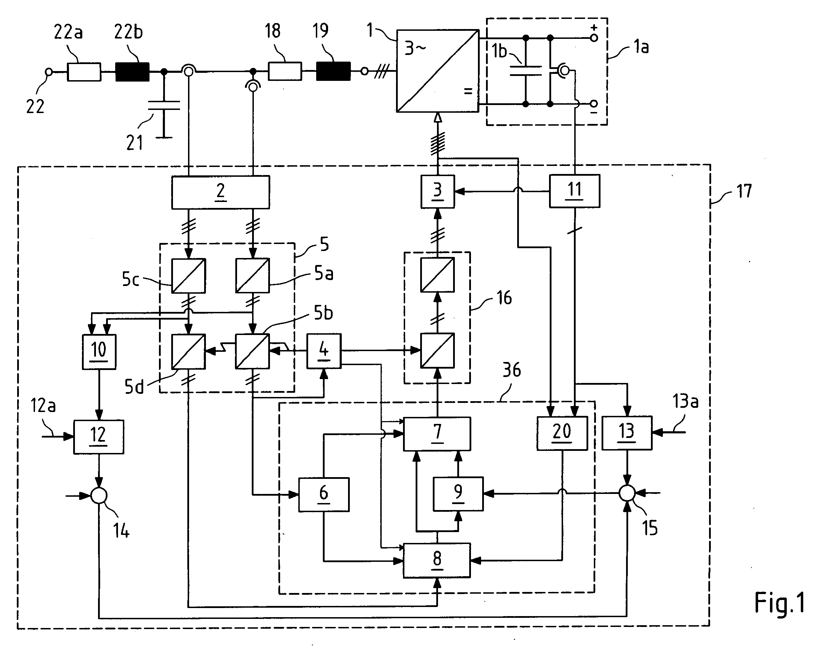

In der Zeichnung zeigt nun die Fig. 1 das Blockschaltbild eines Ausführungsbeispiels einer erfindungsgemäßen Vorrichtung zur prädiktiven Stromregelung eines netzparallelen, selbstgeführten Spannungsumrichters 1. In dem dargestellten Ausführungsbeispiel ist der Spannungsumrichter 1 zwischen einem durch einen Kondensator 1b gestützten Gleichspannungszwischenkreis 1a und dem dreiphasigen Wechselspannungsnetz 22 angeordnet.

Üblicherweise erfolgt der Anschluss des Spannungsumrichters 1 mit dem Wechselspannungsnetz 22 über ein Filterkondensator 21 und einer Filterdrossel, welche aus einer Induktivität 22a und dem ohmschen Widerstand 22b aufgebaut ist. Auf den Filterkondensator 21 und die Filterdrossel 22a, 22b kann jedoch verzichtet werden, wenn das Verhältnis der Kurzschlussleistungen des Wechselspannungsnetzes und des netzparallelen, selbstgeführten Spannungsumrichters ausreichend hoch ist. Darüber hinaus ist in dem dargestellten Ausführungsbeispiel der erfindungsgemäßen Vorrichtung zwischen dem Wechselspannungsnetz 22 und dem netzparallelen, selbstgeführten Spannungsumrichter 1 eine Umrichterdrossel, bestehend aus der Induktivität 18 und dem ohmschen Widerstand 19 als Tiefpassfilter angeordnet, um möglichst keine hochfrequenten Spannungsanteile, verursacht durch Schaltvorgänge des Spannungsumrichters 1, an das Wechselspannungsnetz 22 abzugeben.

Zur prädiktiven Stromregelung des netzparallelen, selbstgeführten Spannungsumrichters 1 sind nun auf der Netzseite der Umrichterdrossel 18, 19 Mittel zur Messung der netzseitigen, dreiphasigen Spannungskomponenten $\underset{\rightarrow}{u}_c(t)$ und Stromkomponenten $\underset{\rightarrow}{i}(t)$ 2 vorgesehen. Die gemessenen Spannungs- und Stromkomponenten werden unter Verwendung von Mitteln zur Transformation der dreiphasigen Spannungs- und Stromkomponenten 5 vorzugsweise zunächst in die Raumzeigerebene ($\alpha\beta$) und aus der Raumzeigerebene ($\alpha\beta$) in ein rotierendes Koordinatensystem (xy) transformiert, welches synchron zum Grundschwingungsmitsystem der Netzspannung mit der Kreisfrequenz $\omega_f$ und der Phasenlage $\chi_f(t)$ des Grundschwingungsmitsystems rotiert. In dem vorliegenden Ausführungsbeispiel der Erfindung wird die Kreisfrequenz $\omega_f$ und die Phasenlage $\chi_f(t)$ des Grundschwingungsmitsystems der Netzspannung von Mitteln zur Bestimmung der Kreisfrequenz $\omega_{-f}$ und der Phasenlage $\chi_f(t)$ des Grundschwingungsmitsystems der Netzspannung 4 unter Verwendung eines Phase-Locked-Loop-Verfahren bestimmt. Die Mittel zur Bestimmung der Kreisfrequenz $\omega_f$ und der Phasenlage $\chi_f(t)$ 4 bestimmen die Parameter aus der Messung der netzseitigen Spannung $\underset{\rightarrow}{u}_c(t)$. Es können jedoch auch andere geeignete Mittel und Verfahren zur Bestimmung der Kreisfrequenz $\omega_f$ und der Phasenlage $\chi_f(t)$ verwendet werden.

Nach der Transformation in das rotierende Koordinatensystem (xy) wird ein Stromraumzeiger $\underset{\rightarrow}{i}'(t)$ erhalten, dessen Amplitude und Phasenlage unabhängig von Oberschwingungen oder Verzerrungen der Netzspannung ist. Damit steht zur prädiktiven Stromregelung eine Regelgröße in Form des netzseitigen Stromraumzeigers $\underset{\rightarrow}{i}'(t)$ zur Verfügung, welcher frei von Einflüssen verzerrter oder oberschwingungsbehafteter Netzspannungen ist. Die Stromraumzeiger $\underset{\rightarrow}{i}'(t)$ und der Spannungsraumzeiger $\underset{\rightarrow}{u}_c'(t)$ werden einer optimierten prädiktiven Stromregelung 36 übergeben, welche den Verlauf des Stromraumzeigers für den nächsten Schaltvorgang abschätzt und den Spannungsumrichter 1 entsprechend ansteuert.

Die Ansteuerung des netzparallelen, selbstgeführten Spannungsumrichters 1 erfolgt über geeignete Mittel zur Ansteuerung des Spannungsumrichters 3, wobei vorzugsweise eine Pulsweitenmodulation (PWM) verwendet wird. Mit der Schaltfrequenz $f_s$ des netzparallelen, selbstgeführten Spannungsumrichters werden nun die dreiphasigen Spannungen und Ströme $\underset{\rightarrow}{u}_c(t)$ und $\underset{\rightarrow}{i}(t)$ jeweils am Anfang einer Modulationsperiode der PWM 3 abgetastet, wobei für die Modulationsperiode $T_M$ Gleichung (2) gilt. Aufgrund des zu diesem Zeitpunkt geschalteten Spannungsnullzustands des Spannungsumrichters entsprechen die abgetasteten Messwerte den Grundschwingungsgrößen, so dass eine Filterung der Messergebnisse, zur Eliminierung schaltfrequenter Oberschwingungen vorzugsweise entfallen kann.

Mit gleicher Abtastfrequenz wird auch über die Mittel zur Messung der Zwischenkreisspannung 11 die Zwischenkreisspannung zu Beginn der Modulationsperiode der PWM ermittelt. Bei geeignet hoher Abtastfrequenz kann im stationären Zustand unter Verwendung einer PWM mit Symmetrierung und Single-Edge-Regular-Sampling, auch als Raumzeigermodulation bekannt, innerhalb einer halben Modulationsperiode die vorgegebene Referenzspannung im Mittel erzeugt und die Nullzustandsdauern am Anfang und Ende symmetriert werden. Das aufzumodulierende Nullzustandssystem ergibt sich unmittelbar aus der Hälfte der betragsmäßig kleinsten umrichterseitigen Sollspannung.

Wie oben bereits ausgeführt, werden die netzseitig gemessenen Spannungs- und Stromkomponenten in ein synchron zum Grundschwingungsmitsystem der Netzspannung rotierendes Koordinatensystem (xy) transformiert. Die Mittel zur Transformation der netzseitig gemessenen Spannungs- und Stromkomponenten 5 sind dabei vorzugsweise in Mittel 5a und 5c aufgeteilt, welche die gemessenen dreiphasigen Spannungs- und Stromkomponenten in die Raum-zeigerebene ($\alpha\beta$) transformieren und Mitteln 5b und 5d zur Transformation der Spannungs- und Stromraumzeiger aus der Raumzeigerebene ($\alpha\beta$) in das rotierende Koordinatensystem (xy). Die in Fig. 1 dargestellten Transformationsmittel 5a und 5b transformieren die netzseitig gemessenen Spannungskomponenten $\underset{\rightarrow}{u}_c(t)$ und die Transformationsmittel 5c und 5d die netzseitig gemessenen Stromkomponenten $\underset{\rightarrow}{i}(t)$. Die Transformationsmittel 5b und 5d geben

den Spannungsraumzeiger $\underset{\rightarrow}{u}_c{}'(t)$ und den Stromraumzeiger $\underset{\rightarrow}{i}{}'(t)$ im rotierenden Koordinatensystem (xy) an die optimierte prädiktive Stromregelung 36 weiter, wobei der Spannungsraumzeiger $\underset{\rightarrow}{u}_c{}'(t)$ an Mittel zur Abschätzung der Zustände des netzseitigen Spannungsraumzeigers 6 für zukünftige Modulationsperioden $T_M$ übergeben wird.

Die genannten Mittel zur Abschätzung der Zustände des netzseitigen Spannungsraumzeigers 6 für zukünftige Modulationsperioden schätzen mit einem geeigneten Abschätzverfahren den netzseitigen Spannungsraumzeiger für die Zeitpunkte $t + 1/2T_M$ und $t + 3/2T_M$ ab. Die Qualität dieser Schätzung hat einen erheblichen Einfluss auf die Netzrückwirkung des Spannungsumrichters 1 und insofern auf die Abweichungen der Stromverläufe im stationären Zustand von ihren geforderten sinusförmigen Sollverläufen, insbesondere dann, wenn die Netzspannung stark verzerrt ist.

Aus der aktuellen und der in beiden vorhergehenden Modulationsperioden gemessenen netzseitigen Spannungen können die einzelnen Komponenten der abzuschätzenden Spannungsraumzeiger $\underset{\rightarrow}{u}_c{}'(t + 1/2T_M)$

und $\underset{\rightarrow}{u}_c{}'(t + 3/2T_M)$ wie folgt abgeschätzt werden. Unter der Annahme einer linearen Änderung des netzseitigen Spannungsraumzeigers in einer Modulationsperiode $T_M$ gilt für die Ableitung der Spannungsraumzeigerkomponenten zum Zeitpunkt $t - 1/2T_M$ und $t - 3/2T_M$:

$$\dot{u}_{xy}\left(t - \tfrac{1}{2}T_M\right) = \tfrac{1}{T_M} \cdot \left[u_{xy}(t) - u_{xy}(t - T_M)\right] \qquad (3)$$

$$\dot{u}_{xy}\left(t - \tfrac{3}{2}T_M\right) = \tfrac{1}{T_M} \cdot \left[u_{xy}(t - T_M) - u_{xy}(t - 2T_M)\right] \qquad (4).$$

In guter Nährung kann nun weiter angenommen werden, dass für die zweite Ableitung des Spannungsraum-zeigers $\ddot{u}_{xy}(t-T_M)$ ebenso ein linearer Zusammenhang zur Differenz der Ableitungen $\dot{u}_{xy}$ zu den Zeitpunkten $t - 1/2T_M$ und $t - 3/2T_M$ vorliegt:

$$\ddot{u}_{xy}(t - T_M) = \tfrac{1}{T_M} \cdot \left[\dot{u}_{xy}\left(t - \tfrac{1}{2}T_M\right) - \dot{u}_{xy}\left(t - \tfrac{3}{2}T_M\right)\right] \qquad (5).$$

Zur weiteren Vereinfachung wird die Ableitungen $\dot{u}_{xy}$ zum Zeitpunkt t + 1/2T$_M$ wie folgt nach dem Mittelwertsatz entwickelt:

$$\dot{u}_{xy}\left(t+\tfrac{1}{2}T_{M}\right)=\dot{u}_{xy}\left(t-\tfrac{1}{2}T_{M}\right)+T_{M}\cdot\ddot{u}_{xy}\left(t-T_{M}\right) \qquad (6).$$

Wird nun ferner für den Spannungsraumzeiger ebenso eine lineare Entwicklung angenommen, folgt:

$$u_{xy}\left(t+\tfrac{1}{2}T_{M}\right)=u_{xy}\left(t\right)+\tfrac{1}{2}T_{M}\cdot\dot{u}_{xy}\left(t+\tfrac{1}{2}T_{M}\right) \qquad (7)$$

$$=2\cdot u_{xy}\left(t\right)-\tfrac{3}{2}\cdot u_{xy}\left(t-T_{M}\right)+\tfrac{1}{2}\cdot u_{xy}\left(t-2T_{M}\right) \qquad (8).$$

Die gleiche Vorgehensweise kann für den netzseitigen Spannungsraumzeiger zum Zeitpunkt t + 3/2T$_M$ herangezogen werden. Diese ergibt:

$$u_{xy}\left(t+\tfrac{3}{2}T_{M}\right)=u_{xy}\left(t\right)+\tfrac{3}{2}T_{M}\cdot\dot{u}_{xy}\left(t+\tfrac{1}{2}T_{M}\right) \qquad (9)$$

$$=4\cdot u_{xy}\left(t\right)-\tfrac{9}{2}\cdot u_{xy}\left(t-T_{M}\right)+\tfrac{3}{2}\cdot u_{xy}\left(t-2T_{M}\right) \qquad (10).$$

Wie aus den Gleichungen (8) und (10) ersichtlich wird, kann aus vorherigen Zuständen zu den Zeitpunkten t - T$_M$ und t - 2T$_M$ des Spannungsraumzeigers zusammen mit dem jeweilig aktuell geschalteten Zustand des Spannungsraumzeigers zum Zeitpunkt $\underrightarrow{u}_{C}{'}(t)$ der Zustand des Spannungsraumzeigers $\underrightarrow{u}_{C}{'}(t + 1/2T_M)$ und $\underrightarrow{u}_{C}{'}(t + 3/2T_M)$ in guter Nährung abgeschätzt werden. Die Vorausbestimmung der Zustände des Spannungsraumzeigers $\underrightarrow{u}_{C}{'}$ liefert insbesondere bei typischen sechs- und höherpulsigen Spannungsverzerrungen gute Ergebnisse.

Die Mittel zur Abschätzung der Zustände des netzseitigen Spannungsraumzeigers 6 übergeben den abgeschätzten Spannungsraumzeiger $\underrightarrow{u}_{C}{'}(t + 1/2T_M)$ Mitteln zur Stromvorsteuerung 8. In dem in Fig. 1 dargestellten Ausführungsbeispiel der erfindungsgemäßen Vorrichtung wird mit den Mitteln zur Stromvorsteuerung 8 aus dem momentanen netzseitigen Strom $\underrightarrow{i}{'}(t),$ dem zukünftigen, abgeschätzten netzseitigen Spannungsraumzeiger $\underrightarrow{u}_{C}{'}(t + 1/2T_M)$ und dem momentan geschalteten umrichterseitigen Spannungsraumzeiger $\underrightarrow{u}_{LSC}{'}(t)$

der Stromraumzeiger zu Beginn der folgenden Modulationsperiode $\underset{\rightarrow}{i}'(t + T_M)$ vorausberechnet.

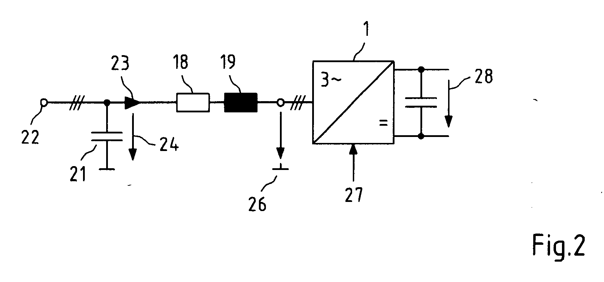

Das bei der Vorausberechnung verwendete Drosselmodell ist als Raumzeigerersatzschaltbild in der Fig. 2 dargestellt. In der Fig. 2 ist zu erkennen, dass der Spannungsumrichter 1 über eine Drossel, bestehend aus einer Induktivität 18 und einem ohmschen Widerstand 19 über einen Filterkondensator 21 an das Wechselspannungsnetz 22 angeschlossen ist.

Durch die Messung des netzseitigen Spannungsraumzeigers $\underset{\rightarrow}{u}_C'(t)$ 24 sowie des netzseitigen Stromraumzeigers $\underset{\rightarrow}{i}'(t)$ 23 in Verbindung mit der Rückkopplung der momentant geschalteten dreiphasigen, umrichterseitigen Spannung $\underset{\rightarrow}{u}_{LSC}(t)$ 26 muss zur Berechnung des Pulsmusters 27 des Spannungsumrichters lediglich die netzseitig vorgesehene Umrichterdrossel, bestehend aus der Induktivität $L_D$ 18 und dem ohmschen Widerstand $R_D$

19 zur Berechnung des umrichterseitigen Spannungsraumzeigers $\underset{\rightarrow}{u}_{LSC}$ 26 bestimmt werden. Zur Erhöhung der Genauigkeit wird in dem Drosselmodell neben der Induktivität $L_D$ auch der ohmsche Widerstand $R_D$ berücksichtigt. Aus dem in Fig. 2 dargestellten Raumzeigerersatzschaltbild des Drosselmodells ergibt sich nun für die netzseitigen, drei- phasigen Spannungskomponeten:

$$\underline{u}_C(t) = R_D \cdot \underline{i}(t) + L_D \cdot \frac{d\,\underline{i}(t)}{dt} + \underline{u}_{LSC}(t) \tag{11}$$

In dem mit der Kreisfrequenz $\omega_f$ rotierenden Koordinatensystem (xy) erhält man aus der Gleichung (11)

$$\underline{u}_C'(t) = (R_D + j \cdot \omega_f \cdot L_D) \cdot \underline{i}'(t) + L_D \cdot \frac{d\,\underline{i}'(t)}{dt} + \underline{u}_{LSC}'(t) \tag{12}.$$

Bei ausreichend hohen Schaltfrequenzen des Spannungsumrichters können in guter Nährung lineare Spannungs- und Stromraumzeigerverläufe innerhalb einer Modulationsperiode angenommen werden, so dass folgende Nährung innerhalb einer Modulationsperiode gemacht werden können:

$$\overline{\underline{u}_C'(t)} \cong \underline{u}_C'\left(t + \frac{T_M}{2}\right) \tag{13}$$

$$\overline{\underline{u}_{LSC}'(t)} \cong \underline{u}_{LSC}'(t) \tag{14}$$

$$\overline{\underline{i}\,'(t)} \cong \frac{\underline{i}\,'(t+T_M) + \underline{i}\,'(t)}{2} \qquad (15)$$

$$\frac{\overline{d\,\underline{i}\,'(t)}}{dt} \cong \frac{\underline{i}\,'(t+T_M) - \underline{i}\,'(t)}{T_M} \qquad (16)$$

Unter Anwendung der genannten Nährungen ergibt sich beim Einsetzen der Gleichung (13), (14), (15) und (16) in die Gleichung (12) die folgende Gleichung für den netzseitigen Spannungsraumzeiger zum Zeitpunkt t + 1/2T$_M$:

$$u_c'\left(t+\frac{T_M}{2}\right) = B \cdot i'(t+T_M) + A \cdot i'(t) + u_{LSC}'(t) \qquad (17),$$

wobei sich die Faktoren A und B aus den folgenden Gleichungen ergeben

$$A = \left(\frac{R_D}{2} - \frac{L_D}{T_M} + j \cdot \omega \cdot \frac{L_D}{2}\right) \qquad (18)$$

$$B = \left(\frac{R_D}{2} + \frac{L_D}{T_M} + j \cdot \omega \cdot \frac{L_D}{2}\right) \qquad (19)$$

Mit Hilfe des abgeschätzten Zustands des netzseitigen Spannungsraumzeigers $\underline{u}_c'(t + 1/2T_M)$, dem gemessenen netzseitigen Stromraumzeiger $\underline{i}\,'(t)$ und dem in der momentanen Modulationsperiode vom Spannungsumrichter geschalteten umrichterseitigen Spannungsraumzeiger $\underline{u}_{LSC}'(t)$ kann der Stromraumzeiger zu Beginn der folgenden Modulationsperiode gemäß der nachfolgenden Gleichung berechnet werden:

$$\underline{i}\,'(t+T_M) = \frac{\underline{u}_c'\left(t+\frac{T_M}{2}\right) - A \cdot \underline{i}\,'(t) - \underline{u}_{LSC}'(t)}{B} \qquad (20)$$

Zur Berechung des Stromraumzeigers $\underset{\rightarrow}{i}\,'(t\,+\,T_M)$ zu Beginn der folgenden Modulationsperiode fehlt lediglich der momentan geschaltete umrichterseitige Spannungsraumzeiger $\underset{\rightarrow}{u}\,_{LSC}{}'(t)$. Dieser kann jedoch aus dem von der PWM am Ende der vorangegangenen Modulationsperiode bestimmten Pulsmuster 27 und der gemessenen Zwischenkreisspannung $\underset{\rightarrow}{U}\,_d(t)\;28$ über Rückkopplungsmittel 20 bestimmt werden.

Die Berechnung des Sollwertes des umrichterseitigen Spannungsraumzeigers $\underset{\rightarrow}{u}*_{LSC}{}'(t\,+\,T_M)$ für die folgende Modulationsperiode ergibt sich aus der Gleichung

$$\underline{u}^{\cdot}_{LSC}{}'\left(t+T_M\right)=\underline{u}_C{}'\left(t+\tfrac{3}{2}T_M\right)-A\cdot\underline{i}\,'\left(t+T_M\right)-B\cdot\underline{i}\,'\left(t+2T_M\right) \qquad (22)$$

Zur Berechnung des umrichterseitigen Sollspannungsraumzeigers für die folgende Modulationsperiode $\underset{\rightarrow}{u}*_{LSC}{}'(t\,+\,T_M)$ ist nun noch der Stromraumzeiger zum Ende der folgenden Modulationsperiode $\underset{\rightarrow}{i}\,'(t\,+\,2T_M)$ zu bestimmen.

Der von den Rückkopplungsmitteln 20 berechnete und in der momentanen Modulationsperiode vom Spannungsumrichter geschaltete Spannungsraumzeiger $\underset{\rightarrow}{u}\,_{LSC}{}'(t)$ wird zur Ermittlung des Stromraumzeigers zu Beginn der folgenden Modulationsperiode $\underset{\rightarrow}{i}\,'(t\,+\,T_M)$ an die Mittel zur Stromvorsteuerung 8 übergeben.

Der aus der Stromvorsteuerung 8 berechnete Stromraumzeiger $\underset{\rightarrow}{i}\,'(t\,+\,T_M)$ zu Beginn der folgenden Modulationsperiode wird einerseits an die Mittel zur Spannungsvorsteuerung 7 und an nach dem Deadbeat-Prinzip arbeitende Mittel zur prädiktiven Stromregelung 9 übergeben. Bei den nach dem Deadbeat-Prinzip arbeitenden Mitteln zur prädiktiven Stromregelung 9 werden zur Erzielung einer hohen Dynamik die Sollstromraumzeiger derart bestimmt, dass am Ende der nachfolgenden Modulationsperiode eine Abweichung vom Sollstromraumzeiger ausgeregelt werden kann. Aufgrund der Messwerterfassung am Anfang einer Modulationsperiode, für die die umrichterseitigen Sollspannungsraumzeiger $\underset{\rightarrow}{u}*_{LSC}{}'(t\,+\,T_M)$ bereits vorher an die Mittel zur Ansteuerung des Spannungsumrichters 3 übertragen wurden, kann eine Abweichung des Netzstroms vom Sollwert erst in der nachfolgenden Modulationsperiode ausgeregelt werden, woraus sich eine Totzeit des Systems von $2T_M$ ergibt. Allerdings kann durch zweimaliges Abtasten der Messwerte und Berechnen der Regelungsroutinen pro Modulationsperiode die Totzeit bei den nach dem Deadbeat-Prinzip arbeitenden Mittel zur prädiktiven Stromregelung 9 reduziert bzw. halbiert werden.

Bei dem in Fig. 1 dargestellten, nach dem Deadbeat-Prinzip arbeitenden Mitteln zur prädiktiven Stromregelung 9 kann es sich beispielsweise um einen einfachen P-Regler 28 mit variabler Verstärkung handeln.

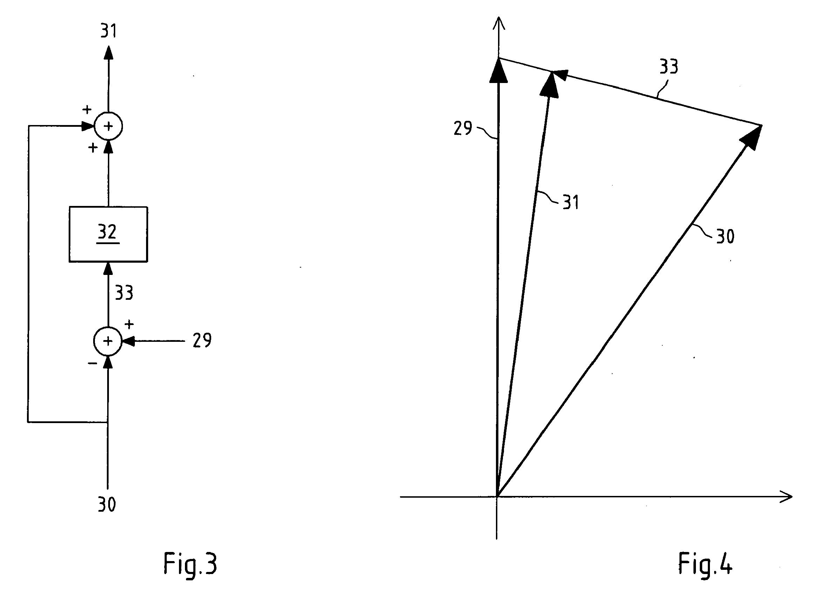

In Fig. 3 ist ein Blockschaltbild des zugehörigen P-Reglers der Mittel zur prädiktiven Stromregelung nach dem Deadbeat-Prinzip 9 des ersten Ausführungsbeispiels und in Fig. 4 die dazugehörigen Stromraumzeiger in einem mit der Kreisfrequenz $\omega_f$ rotierenden Koordinatensystem dargestellt. Wie aus Fig. 3 zu erkennen ist, wird zunächst aus dem Stromraumzeiger 30 $\underset{\rightarrow}{i}\,'(t\,+\,T_M)$ zu Beginn der folgenden Modulationsperiode und dem Sollstromraumzeiger 29 $\underset{\rightarrow}{i}*'(t\,+\,2T_M)$ zum Ende der folgenden Modulationsperiode eine Differenz gebildet und der Differenzstromraumzeiger 33 einer Verstärkung 32 zugeführt, um anschließend wieder mit dem Stromraumzeiger zu Beginn der folgenden Modulationsperiode $\underset{\rightarrow}{i}\,'(t\ +\ T_M)$ addiert zu werden.

Die entsprechende Vektoraddition im mit der Kreisfrequenz $\omega_f$ rotierenden Koordinatensystem ist in Fig. 4 dargestellt. Es wird deutlich, dass, sofern eine Verstärkung 32 mit Faktor 1 erfolgt, eine zum Zeitpunkt t + $T_M$ vorhandene Regelabweichung bis zum Ende der Modulationsperiode t + 2$T_M$ vollständig ausgeregelt ist, was dem Deadbeat-Verfahren entspricht. Trotz der unvermeidbaren Totzeit von 2$T_M$ wird eine hohe Dynamik der Stromregelung erzielt. Eine Verstärkung 32 im Bereich 0 < V < 1 führt zu einem asymptotischen, überschwingungsfreien Ausregelverhalten des P-Reglers 9.

Liegt die Verstärkung 32 im Bereich von 1 < V < 2, führt dies zu einem überschwingungsbehafteten Ausregelverhalten. Eine noch größere Verstärkung V > 2 führt zur Instabilität. Mit Hilfe der variablen Verstärkung kann die erfindungsgemäße Vorrichtung zur prädiktiven Stromregelung eines Spannungsumrichters hinsichtlich der Dynamik und Stabilität optimiert werden.

Der Sollstromraumzeiger zum Ende der folgenden Modulationsperiode $\underset{\rightarrow}{i}\,*'(t\ +\ 2T_M)$ wird in dem in Fig. 1 dargestellten Ausführungsbeispiel der vorliegenden Erfindung vorzugsweise durch Mittel zur Regelung der Blindleistung und der Zwischenkreisspannung 12, 13, welche jeweils die Blind- und Wirkstromkomponente i*$_x$ sowie i*$_y$ für die nachfolgende Modulationsperiode vorgeben, bestimmt. Dabei können die in Fig. 1 dargestellten Mittel zur Regelung der Blindleistung 12 und der Zwischenkreisspannung 13 beispielsweise als PI-Regler ausgebildet sein. Der PI-Regler 12 zur Regelung der Blindleistungsabgabe regelt die mit den Mitteln zur Messung der Blindleistung 10 gemessene Blindleistung auf einen vorgegebenen Blindleistungswert q*. Die vorgegebene Blindleistung q* kann dem PI-Regler von äußeren Steuerungsmitteln 12a vorgegeben werden. Die Mittel zur Messung der Blindleistung messen diese vorzugsweise in der Raumzeigerebene.

In dem in Fig. 1 dargestellten Ausführungsbeispiel der erfindungsgemäßen Vorrichtung kann ferner durch äußere Steuerungsmittel 13a ein Sollzwischenkreisspannungswert U*$_d$ an den PI-Regler 13 übergeben werden. Unter Verwendung der gemessenen Zwischenkreisspannung über die Mittel zur Messung der Zwischenkreisspannung 11 kann die Zwischenkreisspannung auf den Wert U*$_d$, beispielsweise einen konstanten Wert, unter Verwendung des PI-Reglers 13 geregelt werden. Hierzu wird eine netzseitige Sollwirkstromkomponente i*$_y$ ermittelt, welche zur Erhöhung der Dynamik, ebenso wie die Sollblindstromkomponente i*$_x$ durch eine geeignete Vorsteuerung 14, 15 vorgesteuert werden kann.

Aus dem mit den Mitteln zur Stromvorsteuerung 8 berechneten Stromraumzeiger zu Beginn der folgenden Modulationsperiode $\underset{\rightarrow}{i}\,'(t\ +\ T_M)$ und dem mit den Mitteln zur prädiktiven Stromregelung nach dem Deadbeat-Prinzip 9 ermittelten Stromraumzeiger $\underset{\rightarrow}{i}\,'(t\ +\ 2T_M)$ zum Ende der folgenden Modulationsperiode kann nun über die Mittel zur Spannungsvorsteuerung 7, welche ebenso das zuvor diskutierte Drosselmodell unter Berücksichtigung des ohmschen Widerstandes R$_D$ und der Induktivität L$_D$ verwenden, der umrichterseitige Sollspannungsraumzeiger $\underset{\rightarrow}{u}\,*_{LSC}'(t\ +\ T_M)$ für die folgende Modulationsperiode ermittelt werden und Mitteln zur Rücktransformation aus dem rotierenden Koordinatensystem (xy) in dreiphasige Stromkomponenten 16 zugeführt werden. Die Mittel zur Rücktransformation des Sollspannungsraumzeigers $\underset{\rightarrow}{u}\,*_{LSC}'(t\ +\ T_M)$ transformieren diesen zuerst in die Raumzeigerebene ($\alpha\beta$), in welcher vorzugsweise eine Vorsteuerung um 3/2 $\omega_f T_M$ erfolgt, um die Totzeit des Regelungssystems zu kompensieren.

Wie oben bereits ausgeführt, beeinflusst der überlagerte PI-Regler 13 die Sollwirkstromkomponente i*y, so dass sich die Zwischenkreisspannung auf einen Sollwert U*$_d$ regeln lässt. Dabei sind auch negative Werte zulässig, die bei Überspannungen im Zwischenkreis bzw. beim generatorischen Betrieb der Antriebsmaschine eine Umkehr der Lastflussrichtung, d. h. eine Rückspeisung, darstellen und daher einer Phasendrehung des Sollstromraumzeigers um 180˚ entsprechen.

Vorzugsweise wird das in Fig. 1 dargestellte Ausführungsbeispiel unter Verwendung von Mitteln zur Datenverarbeitung 17 realisiert, wobei möglichst viele der aufgeführten Berechungen über ein erfindungsgemäßes Computerprogramm ausgeführt werden. In dem in Fig. 1 dargestellten Ausführungsbeispiel werden alle genannten Messungen und Berechnungen von den Mittel zur Datenverarbeitung 17 durchgeführt. Eine modulare Aufteilung der einzelnen Berechnungsschritte der Mittel zur Datenverarbeitung 17 kann insbesondere bei einer Nachrüstung von bestehenden Spannungsumrichtern vorteilhaft sein.

Ein zweites erfindungsgemäßes Ausführungsbeispiel wurde nun in einem Simulationsmodell mit denen in der Tabelle 1 genannten Parametern simuliert.

Tab.1

| Spannungsumrichter | | Netz | | Netzspannungsharmonische | | | |
|---|---|---|---|---|---|---|---|
| $I_N$ | 500 A | $U_N$ | 400 V | $U_{-1} / U_N$ | 2,25 % | (Gegensystem) | |
| $U_d{}^*$ | 700 V | $f_N$ 50 Hz | 50 Hz | $U_{-5} / U_N$ | 1,85 % | $U_{-23} / U_N$ | 0,05 % |
| $C_d$ | 15 mF | **Netzdrossel** | | $U_7 / U_N$ | 1,32 % | $U_{25} / U_N$ | 0, 05 % |
| $f_S$ | 4 kHz | $R_D$ | 30,4 mΩ | $U_{-11} / U_N$ | 0,42 % | $U_{-29} / U_N$ | 0,02 % |
| $T_M$ | 250 μs | $L_D$ | 193,7 μH | $U_{13} / U_N$ | 0,36 % | $U_{31} / U_N$ | 0,02 % |
| **Stromregler** | | | | $U_{-17} / U_N$ | 0,14 % | $U_{-35} / U_N$ | 0,01 % |
| V | 1 | | | $U_{19} / U_N$ | 0,12 % | $U_{37} / U_N$ | 0,01 % % |

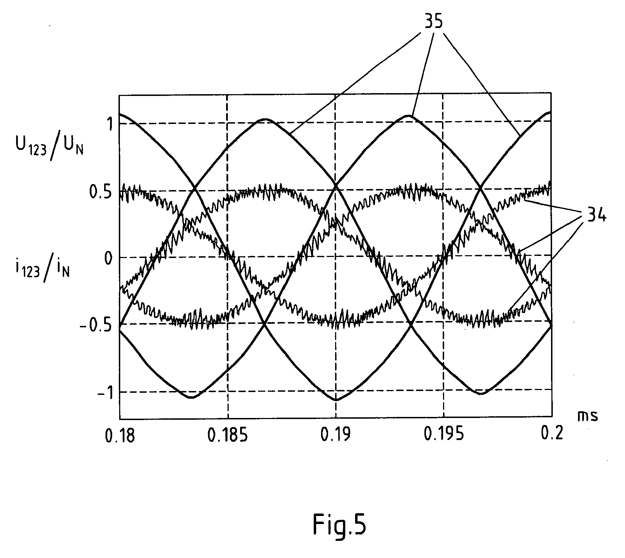

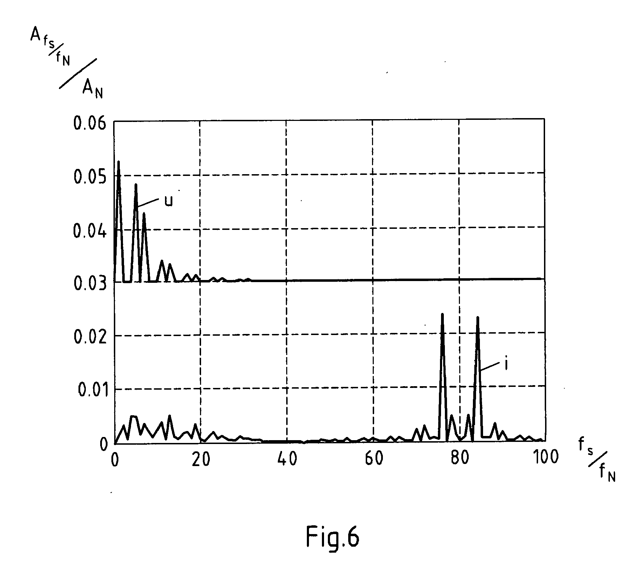

In Fig. 5 sind die stationären Spannungs- und Stromverläufe im Verhältnis zu den Nennspannungen und -strömen, die sich bei halber Nennleistungsaufnahme des netzparallelen, selbstgeführten Spannungsumrichters ergeben, dargestellt. Trotz der verzerrten bzw. oberschwingungsbehafteten Netzspannungen $U_{123}$ 35 liefert der erfindungsgemäß geregelte, netzparallele, selbstgeführte Spannungsumrichter nahezu sinusförmige Netzströme $i_{123}$ 34. Dies verdeutlicht ebenso das Amplitudenspektrum des Eingangsstroms des netzparallelen, selbstgeführten Spannungsumrichters, welches in Fig. 6 dargestellt ist.

In dem Diagramm in Fig. 6 ist auf der X-Achse das Verhältnis der Schaltfrequenz zur Netzfrequenz aufgetragen. Die Y-Achse zeigt das entsprechende Amplitudenverhältnis der Oberschwingungen. Lediglich in den Seitenbändern, in welchen das Verhältnis der Schaltfrequenz $f_s$ zur Netzfrequenz $f_N$ 80 beträgt, sind unvermeidbare pulsfrequente Oberschwingungen zu erkennen. Die resultierenden Oberschwingungen niedriger Ordnung ergeben sich aus der Ungenauigkeit der Spannungsschätzung, insbesondere für den Raumzeiger $\vec{u}_c{}'(t + 3/2T_M)$ und der endlich hohen Schaltfrequenz von 4 kHz in dem vorliegenden Ausführungsbeispiel. Zwar ist eine weitere Reduzierung dieser Oberschwingungen durch eine höhere Schaltfrequenz und eine verbesserte Spannungsschätzung, beispielsweise durch Einsatz einer Fast Fourier Transformation (FFT) erreichbar. Allerdings ist aufgrund eines erhöhten Rechenaufwands, welcher wiederum eine Schaltfrequenzreduzierung erfordert, eine Verbesserung nur bedingt möglich.

Der Gesamtklirrfaktor $u_{THD}$ für die Spannung beträgt in dem simulierten zweiten Ausführungsbeispiel 3,2 % und der Gesamtklirrfaktor $i_{THD}$ für den Netzstrom 1,33 %. Eine modulierte Abweichung der dreiphasigen Drosselwiderstände und Induktivitäten von bis zu +/-15 % gegenüber den Parametern des Drosselmodells der Stromregelung ergaben lediglich geringfügige Abweichung der in Fig. 5 und Fig. 6 dargestellten Verläufe, was die Robustheit des erfindungsgemäßen Verfahrens bzw. der erfindungsgemäßen Vorrichtung zur prädiktiven Stromregelung eines netzparallelen, selbstgeführten Spannungsumrichters gegenüber Parameterabweichungen belegt. Idealerweise ist eine Online-Parameteridentifikation/Messung in die Steuerungssoftware integriert, um mögliche Änderungen der Parameter bereits während des Betriebes, welche beispielsweise aufgrund Erwärmung auftreten können, zu ermitteln.

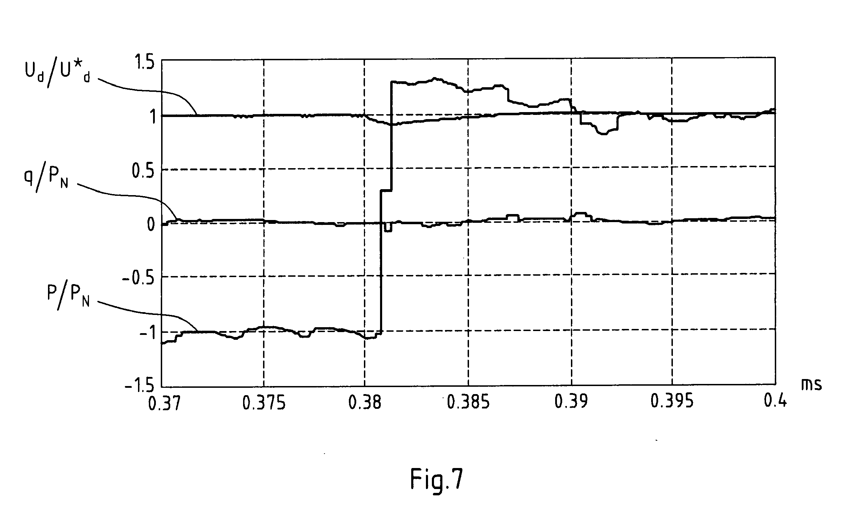

Ein wichtiger Gesichtspunkt ist das dynamische Verhalten des netzparallelen, selbstgeführten Spannungsumrichters. Eine Simulation des dynamischen Verhaltens des zweiten Ausführungsbeispiels unter unterschiedlichen Bedingungen ist in den Fig. 7, 8 sowie 9 und 10 dargestellt.

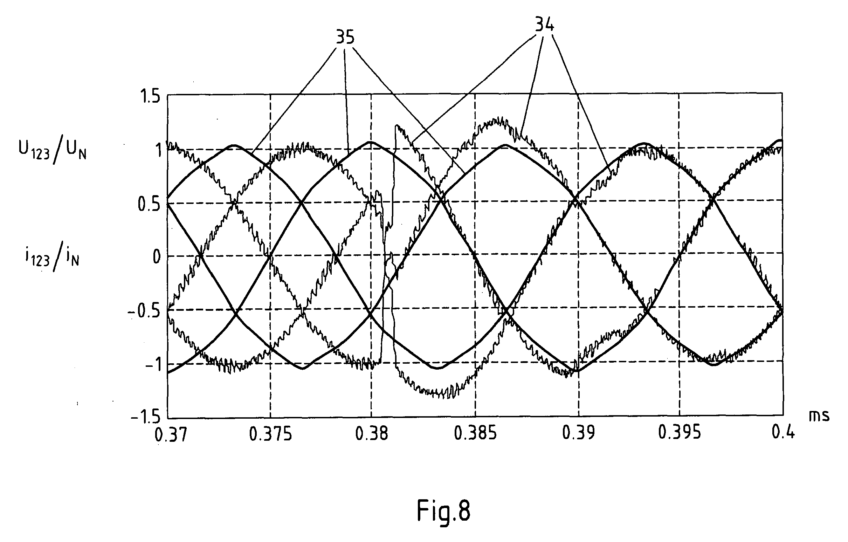

Wie aus Fig. 7 hervorgeht, wird zum Zeitpunkt t = 0,38 ms vom generatorischen in den motorischen Betrieb bei voller Nennleistung ein Lastsprung simuliert. Nach der unvermeidbaren, systemabhängigen Totzeit von zwei Modulationsperioden von 0,5 ms wird in den nachfolgenden 1 bis 2 Modulationsperioden der Strom des netzparallelen, selbstgeführten Spannungsumrichters 1 direkt auf seinen neuen Sollwert geregelt. Dabei wird aufgrund des Absinkens der Zwischenkreisspannung $U_D$ innerhalb der Tot- und Ausregelzeit durch den überlagerten Zwischenkreisspannungsregler 13 im Anschluss für ca. 5 ms die Wirkleistungsaufnahme aus dem Netz erhöht. Der Blindleistungsregler 12 ist in der in Fig. 7 dargestellten Simulation eines Lastsprungs deaktiviert, d. h. die Blindleistung wird lediglich gesteuert. Wie zu erkennen ist, ist sie auch im dynamischen Fall annähernd 0. Die entsprechenden Spannungs- und Stromverläufe sind in Fig. 8 dargestellt.

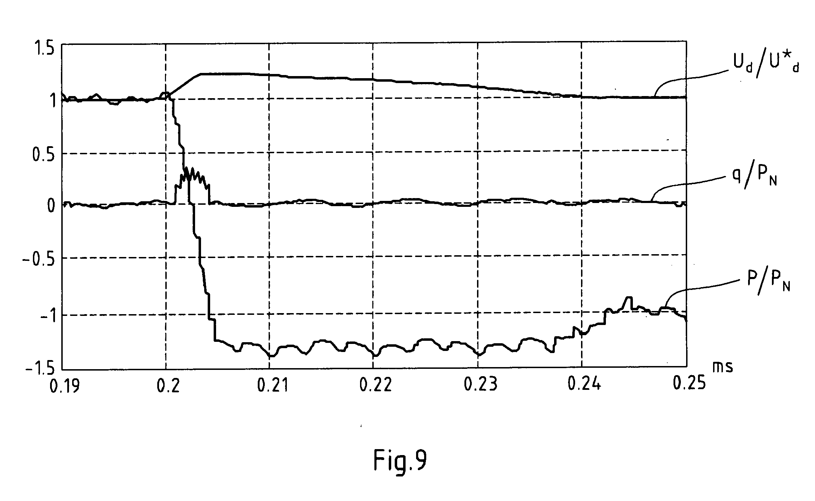

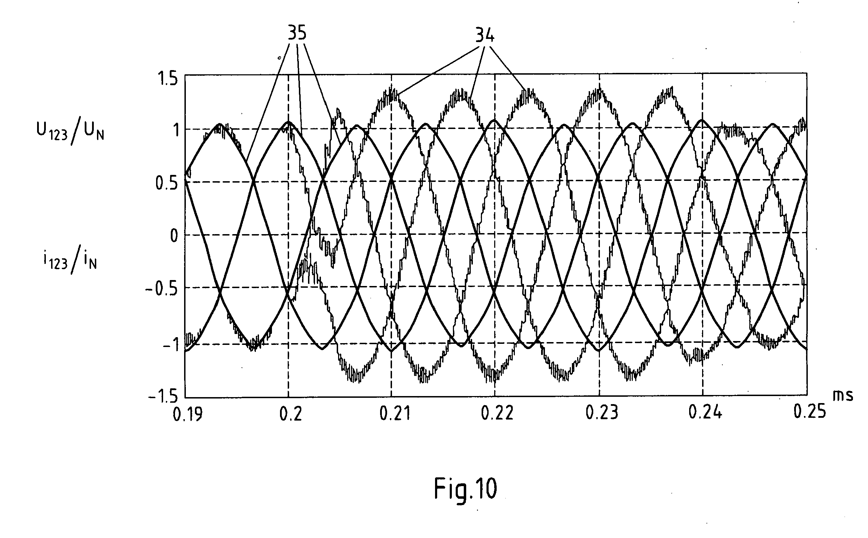

Die Fig. 9 und 10 zeigen nun eine Simulation des zweiten Ausführungsbeispiel einer erfindungsgemäßen Vorrichtung während eines inversen Lastsprungs zum Zeitpunk t = 0,2 ms vom motorischen in den generatorischen Betrieb bei voller Nennleistung. Aufgrund der in diesem Fall durch die maximale Ausgangsspannung des netzparallelen, selbstgeführten Spannungsumrichters begrenzten Stellgröße des Stromreglers verlängert sich die Anregelzeit auf ca. 3,5 ms. Dies hat einen höheren Anstieg der Zwischenkreisspannung $U_D$ zur Folge, welcher wiederum durch den überlagerten Zwischenkreisspannungsregler 13 über eine erhöhte Wirkleistungsabgabe an das Netz ausgeregelt wird. In den Mitteln zur prädiktiven Stromregelung 9 kann zusätzlich eine Strombegrenzung bezüglich des maximalen kurzzeitigen Netzstroms des netzparallelen, selbstgeführten Spannungsumrichters 1 implementiert werden. Im vorliegenden Fall ist der Nennstrom auf das 1,3fache begrenzt. Dies ist jedoch abhängig von den jeweils eingesetzten IGBT-Modulen. Die maximale Spannungsumrichterleistung wird hierdurch ebenfalls auf das 1,3fache der Nennleistung begrenzt, welches in Fig. 9 im Anschluss des Lastsprungs deutlich zu erkennen ist. Dies führt zu einem verlängerten Ausregeln der Zwischenkreisspannung $U_D$. Die lediglich gesteuerte Blindleistung ist auch im vorliegenden Lastsprung annähernd 0.

**Patentansprüche**

1. Verfahren zur prädiktiven Stromregelung eines netzparallelen, selbstgeführten Spannungsumrichters nach dem Deadbeat-Prinzip, bei welchem netzseitig dreiphasige Spannungskomponenten $\overrightarrow{u}_c(t)$ und Stromkomponenten $\overrightarrow{i}(t)$ gemessen werden und zur prädiktiven Stromregelung nach dem Deadbeat-Prinzip des Spannungsumrichters verwendet werden,
**dadurch gekennzeichnet, dass** die Kreisfrequenz $\omega_f$ und die Phasenlage $\chi_f(t)$ des Grundschwingungsmitsystems der Netzspannung bestimmt werden und die gemessenen, dreiphasigen Spannungs- und Stromkomponenten in die Raumzeiger $\overrightarrow{u}_c'(t)$ und $\overrightarrow{i}'(t)$ eines zur Kreisfrequenz $\omega_f$ und der Phasenlage $\chi_f(t)$ des Grundschwingungsmitsystems der Netzspannung synchron rotierenden Koordinatensystem (xy) transformiert werden.

2. Verfahren zur prädiktiven Stromregelung eines netzparallelen, selbstgeführten Spannungsumrichters nach Anspruch 1,
**dadurch gekennzeichnet, dass** die Kreisfrequenz $\omega_f$ und die Phasenlage $\chi_f(t)$ des Grundschwingungsmitsystems der Netzspannung unter Verwendung eines Phase-Locked-Loop(PLL)-Verfahrens aus den netzseitig gemessenen Spannungskomponenten ermittelt werden.

3. Verfahren zur prädiktiven Stromregelung eines netzparallelen, selbstgeführten Spannungsumrichters nach Anspruch 1 oder 2,
**dadurch gekennzeichnet, dass** die gemessenen dreiphasigen Spannungs- und Stromkomponenten $\overrightarrow{u}_c(t)$ und $\overrightarrow{i}(t)$ vor der Transformation in das rotierende Koordinatensystem (xy) zuerst in die Raumzeigerebene $(\alpha\beta)$ transformiert werden.

4. Verfahren zur prädiktiven Stromregelung eines netzparallelen, selbstgeführten Spannungsumrichters nach einem der Ansprüche 1 bis 3,
**dadurch gekennzeichnet, dass** der Spannungsumrichter durch eine Pulsweitenmodulation (PWM) gesteuert wird und zur Steuerung der PWM Zustände des netzseitigen Spannungsraumzeigers $\overrightarrow{u}_c'(t)$ für zukünftige Modulationsperioden aus der gemessenen netzseitigen Spannung unter Verwendung einer quadratischen Extrapolation aus Zuständen des netzseitigen Spannungsraumzeigers $\overrightarrow{u}_c'(t)$ vorheriger Modulationsperioden abgeschätzt werden, wobei sich die Modulationsperiode $T_M$ aus dem Kehrwert der Abtastfrequenz der PWM des Spannungsumrichters ergibt.

5. Verfahren zur prädiktiven Stromregelung eines netzparallelen, selbstgeführten Spannungsumrichters nach einem der Ansprüche 1 bis 4,

**dadurch gekennzeichnet, dass** die Abtastfrequenz des PWM so gewählt wird, dass innerhalb einer Modulationsperiode die Spannungs- und Stromraumzeigerverläufe $\underset{\rightarrow}{u}_c{}'(t)$ und $\underset{\rightarrow}{i}{}'(t)$ im Wesentlichen linear sind und die Zwischenkreisspannung $U_d$ im Wesentlichen konstant ist.

6. Verfahren zur prädiktiven Stromregelung eines netzparallelen, selbstgeführten Spannungsumrichters nach einem der Ansprüche 1 bis 5,
**dadurch gekennzeichnet, dass** eine Spannungsvorsteuerung des netzparallelen, selbstgeführten Spannungsumrichters durchgeführt wird, bei welcher ein umrichterseitiger Sollspannungsraumzeiger $\underset{\rightarrow}{u}{}^*_{LSC}(t + T_M)$ für die folgende Modulationsperiode zur Ansteuerung des netzparallelen, selbstgeführten Spannungsumrichters über die PWM ermittelt wird, wobei bei der Ermittlung des umrichterseitigen Sollspannungsraumzeigers $\underset{\rightarrow}{u}{}^*_{LSC}(t + T_M)$ für eine Umrichterdrossel ein Drosselmodell verwendet wird, welches eine Induktivität $L_D$ und einen ohmschen Widerstand $R_D$ der Umrichterdrossel berücksichtigt.

7. Verfahren zur prädiktiven Stromregelung eines netzparallelen, selbstgeführten Spannungsumrichters nach Anspruch 1 bis 6,
**dadurch gekennzeichnet, dass** zur Stromvorsteuerung ein Drosselmodell verwendet wird, welches die Induktivität $L_D$ und den ohmschen Widerstand $R_D$ der Umrichterdrossel berücksichtigt und der Stromraumzeiger $\underset{\rightarrow}{i}{}'(t + T_M)$ zu Beginn der Modulationsperiode berechnet wird, der Stromraumzeiger $\underset{\rightarrow}{i}{}'(t + T_M)$ nach dem Deadbeat-Prinzip arbeitenden Mitteln zur prädiktiven Stromregelung übergeben wird, um einen Stromraumzeiger $\underset{\rightarrow}{i}{}'(t + 2T_M)$ zum Ende der folgenden Modulationsperiode zu ermitteln und der Stromraumzeiger $\underset{\rightarrow}{i}{}'(t + T_M)$ zu Beginn der Modulationsperiode und der Stromraumzeiger zum Ende der folgenden Modulationsperiode $\underset{\rightarrow}{i}{}'(t + 2T_M)$ der Spannungsvorsteuerung des netzparallelen, selbstgeführten Spannungsumrichters zur Ermittlung des umrichterseitigen Sollspannungsraumzeigers $\underset{\rightarrow}{u}{}^*_{LSC}(t + T_M)$ übergeben werden.

8. Verfahren zur prädiktiven Stromregelung eines netzparallelen, selbstgeführten Spannungsumrichters nach Anspruch 6 oder 7,
**dadurch gekennzeichnet, dass** die Induktivität $L_D$ und der ohmschen Widerstand $R_D$ der Umrichterdrossel während der Durchführung des Verfahrens zur prädiktiven Stromregelung des netzparallelen, selbstgeführten Spannungsumrichters neu ermittelt werden.

9. Verfahren zur prädiktiven Stromregelung eines netzparallelen, selbstgeführten Spannungsumrichters nach einem der Ansprüche 6 bis 8,
**dadurch gekennzeichnet, dass** der ermittelte Sollspannungsraumzeiger $\underset{\rightarrow}{u}{}^*_{LSC}(t + T_M)$ zur Ansteuerung der PWM in die Raumzeigerebene ($\alpha\beta$) rücktransformiert wird und eine Vorsteuerung des umrichterseitigen Sollspannungsraumzeigers $\underset{\rightarrow}{u}{}^*_{LSC}(t + T_M)$ um 3/2 $\omega_f T_M$ erfolgt.

10. Verfahren zur prädiktiven Stromregelung eines netzparallelen, selbstgeführten Spannungsumrichters nach Anspruch 8 oder 9,
**dadurch gekennzeichnet, dass** der während der momentanen Modulationsperiode im Mittel geschaltete, umrich-

terseitige Spannungsraumzeiger $\underset{\rightarrow}{u}\,'_{LSC}(t)$ aus der gemessenen Zwischenkreisspannung $U_d(t)$ und dem von der PWM am Ende der vorangegangenen Modulationsperiode bestimmten Pulsmuster über eine Rückkopplung ermittelt wird und von der Stromvorsteuerung des netzparallelen, selbstgeführten Spannungsumrichters zur Berechnung des Stromraumzeigers $\underset{\rightarrow}{i}\,'(t\ +\ T_M)$ zu Beginn der folgenden Modulationsperiode verwendet wird.

11. Verfahren zur prädiktiven Stromregelung eines netzparallelen, selbstgeführten Spannungsumrichters nach einem der Ansprüche 8 bis 10,

    **dadurch gekennzeichnet, dass** aus dem Stromraumzeiger $\underset{\rightarrow}{i}\,'(t\ +\ T_M)$ zu Beginn der Modulationsperiode und einem vorgegebenen Sollstromraumzeiger $\underset{\rightarrow}{i}\,*'(t\ +\ 2T_M)$ zum Ende der folgenden Modulationsperiode der Stromraumzeiger zum Ende der folgenden Modulationsperiode $\underset{\rightarrow}{i}\,'(t\ +\ 2T_M)$ berechnet wird, wobei eine zu Beginn der Modulationsperiode vorhandene Regelabweichung nach dem Deadbeat-Prinzip bis zum Ende der nachfolgenden Modulationsperiode vollständig ausgeregelt werden kann.

12. Verfahren zur prädiktiven Stromregelung eines netzparallelen, selbstgeführten Spannungsumrichters nach einem der Ansprüche 8 bis 11,
    **dadurch gekennzeichnet, dass** die Berechnung des Stromraumzeigers zum Ende der folgenden Modulationsperiode $\underset{\rightarrow}{i}\,'(t\ +\ 2T_M)$ durch einen nach dem Deadbeat-Prinzip arbeitenden und eine variable Verstärkung aufweisenden P-Regler ausgeführt wird.

13. Verfahren zur prädiktiven Stromregelung eines netzparallelen, selbstgeführten Spannungsumrichters nach einem der Ansprüche 8 bis 12,
    **dadurch gekennzeichnet, dass** aus der gemessenen Zwischenkreisspannung $U_d(t)$ und einem vorgegebenen Sollwert für die Zwischenkreisspannung $U^*_d$ über eine entsprechende Regelung und/oder Steuerung, insbesondere unter Verwendung eines PI-Reglers, eine Sollwirkstromkomponente $i^*_y$ des netzseitigen Stromraumzeigers ermittelt wird, welche zur Ermittlung des Stromraumzeigers zum Ende der folgenden Modulationsperiode

    $\underset{\rightarrow}{i}\,'(t\ +\ 2T_M)$ verwendet wird.

14. Verfahren zur prädiktiven Stromregelung eines netzparallelen, selbstgeführten Spannungsumrichters nach einem der Ansprüche 1 bis 12,
    **dadurch gekennzeichnet, dass** unter Verwendung der netzseitig gemessenen Spannungs- und Stromraumzeiger die Blindleistungsabgabe $q(t)$ des netzparallelen, selbstgeführten Spannungsumrichters ermittelt wird und eine Blindleistungsregelung oder - steuerung, insbesondere unter Verwendung eines PI-Reglers, auf einen vorgegebenen Blindleistungswert $q^*$ erfolgt, wobei ein Sollwert für die zugehörige Blindstromkomponente $i^*_x$ des Stromraumzeigers berechnet wird, welche zur Ermittlung des Stromraumzeigers zum Ende der folgenden Modulationsperiode

    $\underset{\rightarrow}{i}\,'(t\ +\ 2T_M)$ verwendet wird.

15. Verfahren zur prädiktiven Stromregelung eines netzparallelen, selbstgeführten Spannungsumrichters nach einem der Ansprüche 13 oder 14,
    **dadurch gekennzeichnet, dass** zusätzlich eine Vorsteuerung der Blindstromkomponente $i^*_x$ und der Wirkstromkomponente $i^*_y$ durchgeführt wird.

16. Verfahren zur prädiktiven Stromregelung eines netzparallelen, selbstgeführten Spannungsumrichters nach einem der Ansprüche 1 bis 15,
    **dadurch gekennzeichnet, dass** das Verfahren unter Ausführung eines Computerprogramms auf einer Datenverarbeitungsanlage durchgeführt wird.

**17.** Computerprogramm zur prädiktiven Stromregelung eines netzparallelen, selbstgeführten Spannungsumrichters nach dem Deadbeat-Prinzip mit Befehlen, dessen Ausführung mindestens einen Prozessor einer Datenverarbeitungsanlage veranlasst, ein Verfahren nach einem der Ansprüche 1 bis 16 durchzuführen.

**18.** Vorrichtung zur prädiktiven Stromregelung eines netzparallelen, selbstgeführten Spannungsumrichters (1) nach dem Deadbeat-Prinzip, insbesondere zur Durchführung eines Verfahrens nach einem der Patentansprüche 1 bis 16, mit Mitteln zur Messung der netzseitigen, dreiphasigen Spannungskomponenten $\vec{u}_c(t)$ und Stromkomponenten $\vec{i}(t)$ (2) und Mitteln zur Ansteuerung des netzparallelen, selbstgeführten Spannungsumrichters (3) zumindest abhängig von den gemessenen Spannungs- und Stromkomponenten $\vec{u}_c(t)$ und $\vec{i}(t)$, **dadurch gekennzeichnet, dass** Mittel zur Bestimmung der Kreisfrequenz $\omega_f$ und der Phasenlage $\chi_f(t)$ des Grundschwingungsmitsystems der Netzspannung (4) und Mittel zur Transformation der gemessenen dreiphasigen Spannungs- und Stromkomponenten in netzseitige Spannungs- und Stromraumzeiger $\vec{u}_c'(t)$, $\vec{i}'(t)$ eines zur Kreisfrequenz $\omega_f$ und Phasenlage $\chi_f(t)$ des Grundschwingungsmitsystems der Netzspannung synchron rotierenden Koordinatensystem (xy) (5) vorgesehen sind und die Mittel zur Ansteuerung des netzparallelen, selbstgeführten Spannungsumrichters (3) den Spannungsumrichter (1) zumindest abhängig von den transformierten Spannungs- und Stromraumzeigern $\vec{u}_c'(t)$ und $\vec{i}'(t)$ steuern oder regeln.

**19.** Vorrichtung zur prädiktiven Stromregelung eines netzparallelen, selbstgeführten Spannungsumrichters nach Anspruch 18, **dadurch gekennzeichnet, dass** die Mittel zur Bestimmung der Kreisfrequenz $\omega_f$ und Phasenlage $\chi_f(t)$ des Grundschwingungssystem der Netzspannung (4) die Kreisfrequenz $\omega_f$ und die Phasenlage $\chi_f(t)$ des Grundschwingungsmitsystems der Netzspannung unter Verwendung eines PLL-Verfahrens ermitteln.

**20.** Vorrichtung zur prädiktiven Stromregelung eines netzparallelen, selbstgeführten Spannungsumrichters nach Anspruch 18 oder 19, **dadurch gekennzeichnet, dass** die Mittel zur Ansteuerung des netzparallelen, selbstgeführten Spannungsumrichters (3) den Spannungsumrichter (1) über eine PWM ansteuern.

**21.** Vorrichtung zur prädiktiven Stromregelung eines netzparallelen, selbstgeführten Spannungsumrichters nach einem der Ansprüche 18 bis 20, **dadurch gekennzeichnet, dass** Mittel zur Abschätzung der Zustände des netzseitigen Spannungsraumzeigers $\vec{u}_c'(t)$ für zukünftige Modulationsperioden (6) vorgesehen sind, welche unter Verwendung einer quadratischen Extrapolation aus Zuständen des netzseitigen Spannungsraumzeigers $\vec{u}_c'(t)$ vorheriger Modulationsperioden den Zustand des Spannungsraumzeigers $\vec{u}_c'(t)$ abschätzen.

**22.** Vorrichtung zur prädiktiven Stromregelung eines netzparallelen, selbstgeführten Spannungsumrichters nach einem der Ansprüche 18 bis 21, **dadurch gekennzeichnet, dass** Mittel zur Spannungsvorsteuerung (7) vorgesehen sind, welche einen umrichterseitigen Sollspannungsraumzeiger $\vec{u}*_{LSC}(t + T_M)$ für die folgende Modulationsperiode zur Ansteuerung des netzparallelen, selbstgeführten Spannungsumrichters (1) ermitteln und die Mittel zur Spannungsvorsteuerung ein Drosselmodell für die Umrichterdrossel (18, 19) verwenden, welches die Induktivität $L_D$ (18) und den ohmschen Widerstand $R_D$ (19) der Umrichterdrossel berücksichtigt.

23. Vorrichtung zur prädiktiven Stromregelung eines netzparallelen, selbstgeführten Spannungsumrichters nach einem der Ansprüche 18 bis 22,
**dadurch gekennzeichnet, dass** Mittel zur Stromvorsteuerung (8) vorgesehen sind, welche einen Stromraumanzeiger $\underset{\rightarrow}{i}{}'(t + T_M)$ zu Beginn der folgenden Modulationsperiode aus dem netzseitig gemessenen und transformierten Stromraumzeiger $\underset{\rightarrow}{i}{}'(t),$ dem abgeschätzten netzseitigen Spannungsraumzeiger nach einer halben Modulationsperiode $\underset{\rightarrow}{u}{}_c'(t + 1/2T_M)$ und dem momentan geschalteten umrichterseitigen Spannungsraumzeiger $\underset{\rightarrow}{u}{}'_{LSC}(t)$ über ein Drosselmodell für die Umrichterdrossel (18, 19) ermitteln, wobei das Drosselmodell die Induktivität $L_D$ (18) und den ohmschen Widerstand $R_D$ (19) der Umrichterdrossel (18, 19) berücksichtigen und der Stromraumanzeiger zu Beginn der folgenden Modulationsperiode $\underset{\rightarrow}{i}{}'(t + T_M)$ an die Mittel zur Spannungsvorsteuerung (7) übergeben wird.

24. Vorrichtung zur Steuerung eines netzparallelen, selbstgeführten Spannungsumrichters nach einem der Ansprüche 18 bis 23,
**dadurch gekennzeichnet, dass** nach dem Deadbeat-Prinzip arbeitende Mittel zur prädiktiven Stromregelung (9) vorgesehen sind, welche aus dem Stromraumzeiger zu Beginn der folgenden Modulationsperiode

$\underset{\rightarrow}{i}{}'(t + T_M)$ und einem vorgegebene Sollstromraumzeiger zum Ende der folgenden Modulationsperiode

$\underset{\rightarrow}{i}{}*'(t + 2T_M)$ den Stromraumzeiger zum Ende der folgenden Modulationsperiode $\underset{\rightarrow}{i}{}'(t + 2T_M)$

ermitteln und den so ermittelten Stromraumzeiger $\underset{\rightarrow}{i}{}'(t + 2T_M)$ an die Mittel zur Spannungsvorsteuerung (7) übergeben.

25. Vorrichtung zur prädiktiven Stromregelung eines netzparallelen, selbstgeführten Spannungsumrichters nach einem der Ansprüche 18 bis 24,
**dadurch gekennzeichnet, dass** Mittel zur Messung der netzseitigen Blindleistung (10) und/oder Mittel zur Regelung oder Steuerung der netzseitigen Blindleistung (12) vorgesehen sind.

26. Vorrichtung zur prädiktiven Stromregelung eines netzparallelen, selbstgeführten Spannungsumrichters nach einem der Ansprüche 18 bis 25,
**dadurch gekennzeichnet, dass** der Spannungsumrichter (1) mit einem Gleichspannungszwischenkreis (1a) verbunden ist, Mittel zur Messung der Zwischenkreisspannung (11) und/oder Mittel zur Regelung oder Steuerung der Zwischenkreisspannung (13) vorgesehen sind.

27. Vorrichtung zur prädiktiven Stromregelung eines netzparallelen, selbstgeführten Spannungsumrichters nach Anspruch 25 oder 26,
**dadurch gekennzeichnet, dass** die Mittel zur Regelung der Blindleistung (12) und/oder die Mittel zur Regelung der Zwischenkreisspannung (13) als PI-Regler ausgebildet sind.

28. Vorrichtung zur prädiktiven Stromregelung eines netzparallelen, selbstgeführten Spannungsumrichters nach einem der Ansprüche 25 bis 27,
**dadurch gekennzeichnet, dass** Mittel zur Vorsteuerung des Sollwertes der Blindstromkomponente i*$_x$ (14) und/oder Mittel zur Vorsteuerung des Sollwertes der Wirkstromkomponente i*$_y$ (15) vorgesehen sind.

29. Vorrichtung zur prädiktiven Stromregelung eines netzparallelen, selbstgeführten Spannungsumrichters nach einem der Ansprüche 26 bis 28,
**dadurch gekennzeichnet, dass** Mittel zur Rückkopplung (20) vorgesehen sind, welche aus der gemessenen Zwischenkreisspannung und des von der PWM (3) am Ende der vorangegangenen Modulationsperiode bestimmten Pulsmusters den während der momentanen Modulationsperiode geschalteten, umrichterseitigen Spannungsraumzeiger $\vec{u}_{\text{LSC}}'(t)$ ermitteln und an die Mittel zur Stromvorsteuerung (8) übergeben.

**30.** Vorrichtung zur prädiktiven Stromregelung eines netzparallelen, selbstgeführten Spannungsumrichters nach einem der Ansprüche 18 bis 29,
**dadurch gekennzeichnet, dass** Mittel zur Rücktransformation vorgesehen sind, welche den ermittelten umrichterseitigen Sollspannungsraumzeiger $\vec{u}*_{\text{LSC}}'(t + T_M)$ aus dem zur Kreisfrequenz $\omega_f$ und der Phasenlage

$\chi_f(t)$ des Grundschwingungsmitsystems der Netzspannung synchron rotierenden Koordinatensystem (xy) zuerst in die Raumzeigerebene ($\alpha\beta$) und anschließend in die dreiphasigen Spannungskomponenten rücktransformieren.

**31.** Vorrichtung zur prädiktiven Stromregelung eines netzparallelen, selbstgeführten Spannungsumrichters nach Anspruch 30,
**dadurch gekennzeichnet, dass** die Mittel zur Rücktransformation (16) eine Vorsteuerung des umrichterseitigen

Sollspannungsraumzeiger $\vec{u}*_{\text{LSC}}(t + T_M)$ um 3/2 $\omega_f T_M$ durchführen.

**32.** Vorrichtung zur prädiktiven Stromregelung eines netzparallelen, selbstgeführten Spannungsumrichters nach einem der Ansprüche 18 bis 31,
**dadurch gekennzeichnet, dass** Mittel zur Datenverarbeitung (17) vorgesehen sind.

**33.** Vorrichtung zur prädiktiven Stromregelung eines netzparallelen, selbstgeführten Spannungsumrichters nach einem der Ansprüche 18 bis 32,
**dadurch gekennzeichnet, dass** die Vorrichtung modular aufgebaut ist.

**34.** Verwendung einer Vorrichtung nach einem der Ansprüche 18 bis 33 zur Durchführung des Verfahrens zur prädiktiven Stromregelung nach dem Deadbeat-Prinzip eines netzparallelen, selbstgeführten Spannungsumrichters nach einem der Ansprüche 1 bis 16, insbesondere unter Ausführung eines Computerprogramms nach Anspruch 17, in dezentralen Energieerzeugungsanlagen, insbesondere Windkraft- oder Photovoltaikanlagen, in aktiven Filtern oder unterbrechungsfreien Stromversorgungsanlagen oder in elektrischen Antrieben, insbesondere bei Maschinen mit variabler Drehzahl.

Fig.1

Fig.2

EP 1 708 349 A1

Fig.4

Fig.3

Fig.5

Fig.6

EP 1 708 349 A1

Fig.7

Fig.8

EP 1 708 349 A1

Fig.9

Fig.10

EP 1 708 349 A1

Europäisches
Patentamt

**EUROPÄISCHER RECHERCHENBERICHT**

Nummer der Anmeldung

EP 05 00 7036

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | MALESANI L ET AL: "Robust dead-beat current control for PWM rectifiers and active filters" INDUSTRY APPLICATIONS CONFERENCE, 1998. THIRTY-THIRD IAS ANNUAL MEETING. THE 1998 IEEE ST. LOUIS, MO, USA 12-15 OCT. 1998, NEW YORK, NY, USA,IEEE, US, Bd. 2, 12. Oktober 1998 (1998-10-12), Seiten 1377-1384, XP010313019 ISBN: 0-7803-4943-1 * Absatz [0003]; Abbildung 2 * ----- | 1-34 | H02M7/219 |
| A | KELIANG ZHOU ET AL: "Repetitive controlled three-phase reversible ipwm rectifier" AMERICAN CONTROL CONFERENCE, 2000. PROCEEDINGS OF THE 2000 JUNE 28-30, 2000, PISCATAWAY, NJ, USA,IEEE, Bd. 1, 28. Juni 2000 (2000-06-28), Seiten 125-129, XP010518025 ISBN: 0-7803-5519-9 * Absatz [0003]; Abbildungen 1-4 * ----- | 1-34 | |
| | | | RECHERCHIERTE SACHGEBIETE (Int.Cl.7) |
| | | | H02M |
| X | SAETIEO S ET AL: "Fuzzy logic control of a space vector PWM current regulator for three phase power converters" APPLIED POWER ELECTRONICS CONFERENCE AND EXPOSITION, 1997. APEC '97 CONFERENCE PROCEEDINGS 1997., TWELFTH ANNUAL ATLANTA, GA, USA 23-27 FEB. 1997, NEW YORK, NY, USA,IEEE, US, Bd. 2, 23. Februar 1997 (1997-02-23), Seiten 879-885, XP010215764 ISBN: 0-7803-3704-2 * Absatz [0002]; Abbildungen 1,2 * ----- | 1,17,18, 34 | |

Der vorliegende Recherchenbericht wurde für alle Patentansprüche erstellt

| Recherchenort | Abschlußdatum der Recherche | Prüfer |
|---|---|---|
| Den Haag | 19. Oktober 2005 | Gentili, L |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *IEEE Transactions on Industrial Electronics, Comparison of Current Control Techniques for Active Filter Application,* Oktober 1998, vol. 45 (5